# FASCICULE DE BREVET EUROPEEN

(11) **EP 0 722 355 B1**
(45) Date de publication et mention de la délivrance du brevet: **03.03.1999**
(21) Numéro de dépôt: 94923768.9
(22) Date de dépôt: 01.08.1994
(51) Int. Cl.: B01D 15/02, B01J 8/04, B01D 53/04

(54) **DISTRIBUTEUR-MELANGEUR-EXTRACTEUR DE FLUIDE MONOPHASIQUE POUR LITS DE SOLIDES GRANULAIRES**
VORRICHTUNG ZUM VERTEILEN, MISCHEN UND ENTNEHMEN EINES MONOPHASISCHEN FLUIDUMS FÜR FESTSTOFFPARTIKELBETTEN
SINGLE-PHASE FLUID DISPENSING, MIXING AND REMOVING APPARATUS FOR BEDS OF GRANULAR SOLIDS

(30) Priorité: 02.08.1993 FR 9309593
(43) Date de publication de la demande: 24.07.1996
(73) Titulaire: INSTITUT FRANCAIS DU PETROLE, 92506 Rueil-Malmaison (FR)
(72) Inventeur: HARTER, Isabelle, F-69008 Lyon (FR); DARMANCIER, Denis, F-38200 Vienne (FR); RENARD, Pierre, F-78860 Saint-Nom-La-Bretêche (FR)
(74) Mandataire: Andreeff, François
(86) Numéro de dépôt international: FR9400968
(87) Numéro de publication internationale: WO9503867

(56) Documents cités:
- US-A- 3 214 247
- US-A- 3 723 072
- US-A- 5 200 075

## Description

La présente invention concerne un distributeur-mélangeur-extracteur (dénommé ci-après DME) de fluide monophasique pour lits de solides granulaires. Elle s'applique tout particulièrement à des fluides à l'état gazeux, liquide ou supercritique dans le domaine de la chromatographie. La présente invention concerne également une colonne comportant au moins deux lits de solides granulaires séparés l'un de l'autre par au moins un DME.

Dans le domaine de la distribution d'un fluide à l'entrée d'une zone et en particulier à l'entrée d'un lit de solides granulaires et, plus particulièrement dans le domaine de la chromatographie en phase liquide, il est important d'obtenir une distribution ou une collecte du ou des fluides aussi homogène que possible.

En particulier dans le cas de la chromatographie en lit mobile simulé, souvent dénommée à contre courant simulé, qui associe le plus souvent de larges diamètres et de nombreux étages de séparation avec injection ou soutirage de produits entre deux étages, ce DME doit assurer la collecte radiale d'un fluide principal (A) de façon la plus uniforme possible tout en induisant dans la colonne de chromatographie le minimum de volumes morts. Ce DME doit être conçu de manière à éviter au maximum le rétromélange pouvant nuire à la séparation des corps déjà effectuée dans la zone située en amont de ce DME. Il doit en outre être conçu de manière à ce que la perte de charge DP qu'il induit dans la colonne soit la plus faible possible.

Ce DME doit aussi assurer lors de l'injection d'au moins un fluide secondaire (B) un mélange aussi uniforme que possible de ce fluide (B) avec le fluide (A) et ce, dans les mêmes conditions que ci-devant, c'est-à-dire en minimisant au maximum les volumes morts, le rétromélange et la perte de charge DP induite. Il en est de même dans le cas du soutirage d'un fluide à partir de ce DME.

Enfin ce DME doit assurer la redistribution radiale du fluide obtenu après addition ou soutirage vers l'entrée de la zone de chromatographie située immédiatement en aval dudit DME. Cette redistribution doit être la plus uniforme possible, entraîner le minimum de volumes morts et de rétromélange pour ne pas affecter la séparation des corps déjà effectuée dans la zone située en amont de ce DME et impliquer en outre une perte de charge DP la plus faible possible.

Parmi les systèmes de distributeurs ou de DME décrits dans des publications antérieures et utilisés au stade industriel pour la chimie fine, le laboratoire ou la grande industrie, on peut citer le distributeur proposé par la société AMICON qui comprend un système de déflecteur-distributeur central. Ce distributeur permet d'obtenir une distribution du fluide principal relativement correcte avec de faibles volumes morts mais, il ne comporte pas de moyen permettant d'assurer une fonction d'ajout ou de soutirage d'un fluide secondaire ni de moyen assurant une fonction de mélange d'un fluide secondaire avec le fluide principal. Par ailleurs le système de déflecteur central entraîne quelques perturbations au niveau de la distribution radiale du fluide principal et la perte de charge est relativement importante à cause de vitesses élevées au niveau de la collecte centrale relativement ponctuelle dans le distributeur.

On rappelle que les termes amont et aval sont à considérer par rapport au sens de circulation du fluide.

Le brevet US-A-3.948.775 décrit un DME utilisé dans une colonne chromatographique comportant deux lits dans lequel le fluide principal (A) est collecté en aval d'une grille située à la sortie du premier lit par une conduite et renvoyé en amont du second lit et d'une grille de collecte par une conduite, avant d'être redistribué dans le second lit de manière latérale. Le fluide secondaire (B) peut être introduit par une conduite supplémentaire et mélangé en ligne avec le fluide principal, le mélange se faisant de façon relativement ponctuel. Les zones de collecte et de redistribution sont séparées par un baffle étanche incliné. Ce DME permet d'obtenir une collecte conique avec un faible volume mort. Néanmoins la façon de mélanger les deux fluides n'est pas optimale. De plus l'existence d'une ligne extérieure induit un volume mort supplémentaire pouvant engendrer un phénomène de rétromélange et des pertes de charge additionnelles. La distribution latérale des fluides du fait de son absence de symétrie peut entraîner des difficultés de mise en oeuvre et une homogénéisation imparfaite pour de larges diamètres.

Le DME décrit dans le brevet US-A-3.214.247 est utilisé dans une colonne chromatographique. Le fluide principal est collecté en totalité en aval d'une grille de collecte positionnée à la sortie d'un premier lit et redistribué en aval d'une grille située à proximité d'un second lit. Le fluide secondaire est introduit par des trous positionnés dans la zone centrale du DME où il se mélange directement avec le fluide principal. Ce DME présente l'avantage d'avoir de faibles volumes morts et d'induire une perte de charge relativement modérée du fait de sa collecte transversale. Néanmoins, la fonction de mélange n'est pas maîtrisée en totalité et peut induire des phénomènes de rétromélange dans toute la section conique de collecte et/ou de redistribution. De plus, la zone de mélange n'est pas confinée à la zone centrale selon un diamètre.

La présente invention pallie les inconvénients précités et répond en même temps aux objectifs recherchés par l'utilisation d'un DME en assurant, notamment, un très bon mélange du fluide principal et secondaire.

Le brevet US-A-3.723.072 décrit un distributeur-mélangeur-extracteur d'un ou plusieurs fluides adapté à être interposé dans une colonne entre un premier et un second lit de solides granulaires, comportant en combinaison :
- au moins un moyen de collecte d'un premier fluide ou fluide principal, communiquant avec un espace de collecte,
- au moins un conduit ou conduit d'injection et/ou de soutirage pour introduire et/ou soutirer un second fluide ou fluide secondaire, le conduit étant relié à au moins une première chambre, ou chambre de distribution et/ou de collecte du second fluide, la chambre comportant sur au moins une de ses parois au moins un moyen de passage différent du conduit,
- au moins une deuxième chambre ou chambre de mélange et/ou de soutirage, la deuxième chambre étant disposée à proximité de la première chambre et la deuxième chambre communiquant avec elle par au moins un des moyens de passage, la deuxième chambre comportant au moins un moyen de passage tel qu'une ouverture située sur au moins une de ses parois de façon à laisser le passage du premier fluide provenant de l'espace de collecte, et la deuxième chambre comportant au moins une voie de sortie (passage) d'un mélange résultant du fluide principal et du fluide secondaire,
- un espace de redistribution et un moyen de redistribution du mélange issu de la chambre de mélange,
- un baffle disposé par rapport au moyen de collecte et de la deuxième chambre pour que l'espace de collecte communique avec une des ouvertures et disposé par rapport au moyen de redistribution et de la chambre de mélange pour que l'espace de redistribution communique avec au moins une des voies de sortie, le baffle séparant les espaces de collecte et de redistribution.

Dans ce document, il est indiqué que les voies de sortie sont pourvues de sections perforées destinées à redistribuer le fluide sur l'ensemble du catalyseur, et non à confiner les turbulences du fluide.

Le distributeur selon l'invention du type ci-dessus, est au contraire caractérisé en ce que la ou les voies de sortie sont un ou des orifices calibrés et en ce que la dimension de l'ensemble des orifices calibrés est choisie pour générer une perte de charge adaptée à confiner les turbulences du fluide à l'intérieur de la chambre de mélange.

Le mélange dans l'espace de redistribution est donc un mélange maitrisé.

La section du ou de l'ensemble des orifices calibrés est choisie pour que la vitesse du fluide passant de la chambre de mélange vers l'espace de redistribution soit comprise entre 1 et 5 m/s, les moyens d'introduction du fluide principal depuis l'espace de collecte vers la chambre de mélange comportent des orifices dont la section est telle que la vitesse du fluide principal est comprise entre 1 et 5 m/s et le moyen de passage du fluide secondaire comporte des orifices dont la section est choisie pour que la vitesse de chaque fluide secondaire de ou vers la chambre de mélange à travers ces orifices soit comprise entre 1 et 15 m/s.

Le moyen de redistribution comporte par exemple une grille s'étendant sensiblement sur toute la section de la colonne.

Le distributeur-mélangeur-extracteur peut comporter au moins deux chambres d'injection et/ou de soutirage reliées chacune à un conduit d'injection et/ou de soutirage d'un second fluide, les chambres comportant au moins un orifice de passage du fluide secondaire de chacune des chambres vers la chambre de mélange.

Il comporte par exemple au moins deux chambres d'injection et/ou de soutirage, les chambres de collecte et/ou de soutirage étant disposées l'une à côté de l'autre et au-dessus de la chambre de mélange et/ou de soutirage.

Les conduits d'introduction et/ou de soutirage d'un fluide secondaire peuvent être agencés par rapport à la colonne pour introduire et/ou soutirer un fluide secondaire dans ou à partir de la chambre d'injection et/ou de soutirage selon une direction sensiblement parallèle au moyen de collecte tel qu'une grille.

Les conduits d'introduction et/ou de soutirage d'un fluide secondaire sont par exemple agencés par rapport à la colonne pour introduire et/ou soutirer le ou les fluides secondaires dans ou de la chambre d'injection et/ou de soutirage selon une direction sensiblement perpendiculaire au moyen de collecte tel qu'une grille de collecte.

Les orifices calibrés et les ouvertures de passage du ou des fluides secondaires vers ou de la chambre de mélange peuvent être disposés au niveau de la chambre de mélange pour permettre l'introduction du second fluide et/ou son extraction selon une direction sensiblement perpendiculaire à la sortie du fluide par la voie.

Les ouvertures peuvent être situées sur au moins une première paroi de la chambre de mélange, et les voies de sortie sur au moins une autre des parois de la chambre de mélange et en ce que les ouvertures et les voies de sortie sont disposées en alternance les unes par rapport aux autres.

Les moyens d'introduction et le moyen de passage pour le fluide secondaire peuvent être disposés respectivement par rapport à la chambre de mélange pour permettre la circulation des fluides dans des directions sensiblement parallèles entre elles, suivant des sens opposés.

Les moyens de passage et le moyen de passage pour le fluide secondaire sont par exemple disposés respectivement par rapport à la deuxième chambre et par rapport à la première chambre pour permettre la circulation du second fluide et du premier fluide dans des directions sensiblement perpendiculaires entre elles.

La forme du baffle est adaptée par exemple pour que les espaces de collecte et de redistribution, soient sensiblement tronconiques, les bases des espaces étant en appui sur une des parois de la colonne et les espaces communiquant entre eux par leur ouverture la plus étroite au voisinage de la chambre de collecte.

La forme du baffle et/ou sa disposition dans la colonne sont par exemple choisis pour isoler les espaces de collecte et de redistribution.

Le baffle peut s'étendre de la périphérie de la colonne jusqu'à au moins la chambre de mélange et/ou de soutirage.

Le baffle comporte par exemple au moins une série d'orifices, les orifices communiquant avec les orifices de la chambre de mélange et/ou de soutirage et le baffle s'étend sensiblement sur toute la section de la colonne.

Le baffle peut être un baffle auto-porteur ayant une épaisseur comprise entre 5 et 50 mm et, de préférence, entre 12 et 20 mm.

La chambre de mélange peut comprendre des moyens pour favoriser les turbulences.

La présente invention concerne aussi une colonne comportant au moins un premier lit et au moins un second lit de solides granulaires séparés par au moins un distributeur-mélangeur-extracteur, dans laquelle la première grille est sensiblement en contact avec le premier lit et la deuxième grille est sensiblement en contact avec le second lit.

La première et la deuxième grille peuvent couvrir respectivement sensiblement la totalité de la section de premier lit et sensiblement la totalité de la section du second lit.

La colonne peut comporter plusieurs DME disposés les uns à côté des autres et les conduits d'injection et/ou de soutirage reliant chacune des chambres d'injection et/ou de soutirage sont des ramifications d'une conduite principale.

La distribution des ramifications et leur longueur sont choisies par exemple pour assurer une isolongeur et une symétrie de distribution du fluide secondaire dans chacune des chambres d'injection et/ou de soutirage.

Chaque distributeur-mélangeur-extracteur comporte par exemple au moins un moyen de support externe noyé dans le lit de solides granulaires en aval de la deuxième grille du distributeur-mélangeur-extracteur.

Le moyen de support externe est de type caillebotis ou équivalent.

La présente invention concerne également un procédé pour fabriquer un distributeur-mélangeur-extracteur d'un ou plusieurs fluides adapté à être interposé dans une colonne entre un premier et un second lit de solides granulaires, comportant en combinaison :
- au moins un moyen de collecte d'un premier fluide ou fluide principal, communiquant avec un espace de collecte,
- au moins un conduit ou conduit d'injection et/ou de soutirage pour introduire et/ou soutirer un second fluide ou fluide secondaire, le conduit étant relié à au moins une première chambre, ou chambre de distribution et/ou de collecte du second fluide, la chambre comportant sur au moins une de ses parois au moins un moyen de passage différent du conduit,
- au moins une deuxième chambre ou chambre de mélange et/ou de soutirage, la deuxième chambre étant disposée à proximité de la première chambre et la deuxième chambre communiquant avec elle par au moins un des moyens de passage, la deuxième chambre comportant au moins un moyen de passage tel qu'une ouverture située sur au moins une de ses parois de façon à laisser le passage du premier fluide provenant du espace de collecte, et la deuxième chambre comportant au moins une voie de sortie d'un mélange résultant du fluide principal et du fluide secondaire,
- un espace de redistribution et un moyen de redistribution du mélange issu de la chambre de mélange
- un baffle disposé par rapport au moyen de collecte et de la deuxiéme chambre pour que l'espace de collecte communique avec une des ouvertures et disposé par rapport au moyen de redistribution et de la chambre de mélange pour que l'espace de redistribution communique avec au moins une des voies de sortie, le baffle séparant les espaces de collecte et de redistribution,

Le procédé se caractérise en ce que l'on définit les voies de passage comme étant un ou plusieurs orifices calibrés et l'on dimensionne le ou l'ensemble des orifices calibrés pour obtenir une perte de charge capable de confiner les turbulences du fluide à l'intérieur de la chambre de mélange.

La présente invention concerne aussi une méthode pour distribuer, mélanger et/ou soustraire un ou plusieurs fluides à partir de ou dans un DME et comporte en combinaison au moins les étapes suivantes :
- on collecte au moins un premier fluide ou fluide principal, à l'aide d'un moyen de collecte communiquant avec un espace de collecte, et on fait passer à travers au moins une ouverture de passage vers une chambre de mélange ou chambre de mélange et/ou de soutirage,
- on injecte et/ou on soutire au moins un second fluide à l'aide d'au moins un conduit ou conduit d'injection et/ou de soutirage, le conduit étant relié à au moins une première chambre, ou chambre de distribution et/ou de collecte du second fluide, la chambre comportant sur au moins une de ses parois au moins un moyen de passage différent du conduit, le second fluide étant envoyé vers la chambre de mélange.
Elle se caractérise en ce que
- on soutire le mélange, résultant du fluide principal et du fluide secondaire au sein de la chambre de mélange, par une ou plusieurs voie de sortie, la ou les voies de sortie étant formée par un ou des orifices calibrés et la dimension de l'ensemble du ou des orifices calibrés étant telle que l'on obtient le confinement des turbulences du fluide à l'intérieur de la chambre de mélange, et
- on distribue le mélange extrait par le ou les orifices calibrés à travers un espace de redistribution et des moyens de redistribution.

Selon cette méthode, on introduit par exemple le fluide principal à travers les moyens comportant des orifices dont la section est choisie pour que la vitesse du fluide principal soit comprise entre 1 et 5 m/s,
- on introduit le second fluide secondaire en le faisant passer à travers des moyens de passage comportant des orifices dont la section est choisie pour que la vitesse du fluide secondaire soit comprise entre 1 et 15m/s, et
- on extrait le mélange issu de la chambre de mélange vers l'espace de redistribution avec une vitesse comprise entre 1 et 5 m/s.

On dispose par exemple un DME présentant l'une de ses caractéristiques entre un premier et un second lit de solides granulaires, les moyens de distribution étant en contact avec au moins un des lits de solides granulaires et on distribue le mélange sensiblement sur la section du lit de solides granulaires au contact avec les moyens de distribution.

On peut injecter ou soutirer le fluide secondaire de la chambre d'injection et/ou de soutirage selon une direction sensiblement parallèle au moyen de collecte.

On peut injecter ou soutirer le fluide secondaire de la chambre d'injection et/ou de soutirage selon une direction sensiblement perpendiculaire au moyen de collecte.

On introduit ou on extrait par exemple le second fluide selon une direction sensiblement perpendiculaire à la direction du fluide à travers les orifices.

On peut faire circuler le fluide principal et le fluide secondaire selon des directions sensiblement parallèles entre elles, et suivant des sens opposés.

On peut faire circuler le fluide principal et le fluide secondaire selon des directions sensiblement perpendiculaires entre elles.

L'utilisation du DME selon l'invention et selon la méthode servira pour réaliser une chromatographie en phase liquide.

Dans la suite de la description, le terme DME désigne le distributeur-mélangeur-extracteur, et le terme chambre d'injection, la chambre d'injection et/ou de soutirage.

L'invention et ses caractéristiques seront mieux comprises à la lecture de la description suivante qui est annexée, des figures représentant respectivement :
• les figures 1 et 2 schématisent le principe de l'utilisation d'un distributeur-mélangeur-extracteur ou DME,
• les figures 3, 4A et 4B représentent des coupes transversales et horizontales de DME selon l'art antérieur,
• les figures 5A, 5B, 5C, 5D et 5E représentent un exemple de DME selon l'invention positionné entre deux lits de solides granulaires,
• la figure 6 montre un DME ayant une chambre de mélange de forme circulaire,
- la figure 7 schématise un exemple de réalisation selon l'invention comportant une structure autoportante,
- les figures 8A et 8B représentent différents positionnement des chambres de mélange et d'injection ,
- la figure 9 montre des signaux représentatifs de la distribution du temps de séjour des fluides,
- la figure 10A représente une coupe d'une colonne comportant un DME selon l'invention,
- les figures 10B et 10C montrent un exemple de positionnement de points de prélèvement,
- les figures 11A, 11B, 12A, 12B, 13A, 13B représentent sur un même graphe les courbes de distribution des temps de séjour obtenues grâce aux DME de l'art antérieur et à un DME selon l'invention,
- les figures 14A, 14B, 14C, 14D et14E schématisent différentes formes de DME, et
- les figures 15 à 18, des exemples de disposition de plusieurs DME selon l'invention dans une colonne.

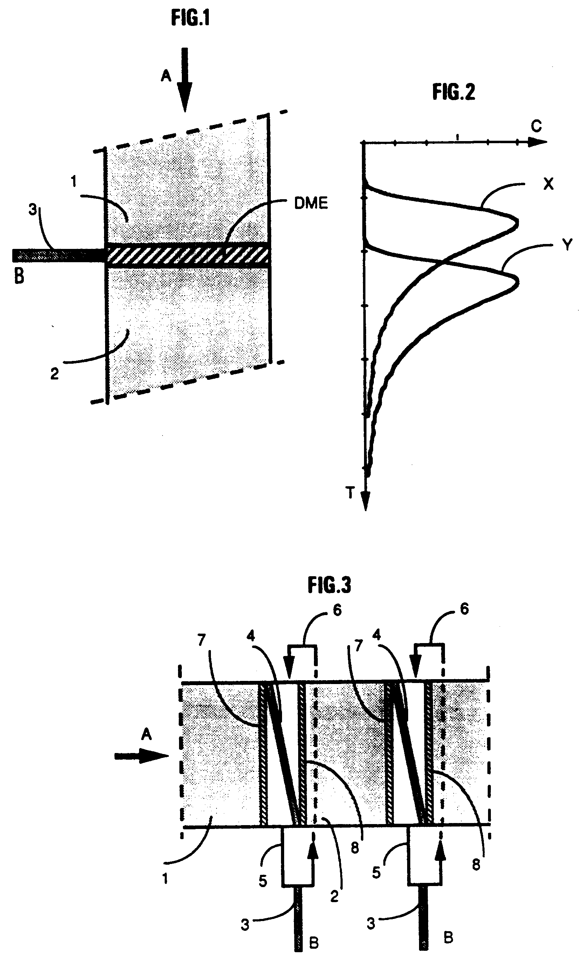

De manière à mieux faire comprendre l'invention, le principe d'un distributeur-mélangeur-extracteur est rappelé brièvement sur les figures 1 et 2. La figure 1 représente en coupe une partie d'une colonne chromatographique comportant deux lits 1 et 2 séparés par un DME. Le DME comprend une conduite 3 permettant l'introduction d'au moins un fluide secondaire (B) ou le retrait d'au moins un fluide. Un fluide principal (A) circule dans la colonne chromatographique du haut vers le bas selon la flèche, c'est-à-dire du premier lit 1 vers le second lit 2. Le rôle du DME est, notamment, d'assurer le transfert du fluide principal (A) du premier lit 1 ou zone 1 jusqu'au second lit 2 ou zone 2 en affectant le moins possible les profils de concentration axiale des fluides, tout en permettant par exemple, l'addition ou le prélèvement d'au moins un fluide secondaire (B), et en restant dans une gamme de perte de charge raisonnable.

La description ci-après est plus particulièrement adaptée lorsque le fluide principal monophasique, habituellement employé pour ce type de DME, se présente sous forme de vapeur ou de liquide. Il peut aussi se présenter dans un état supercritique.

Les courbes de la figure 2 représentent un exemple typique de concentration axiale de deux corps X et Y devant être séparés à partir d'un mélange les contenant, l'axe des abscisses représentant le temps et l'axe des ordonnées la concentration des produits à séparer.

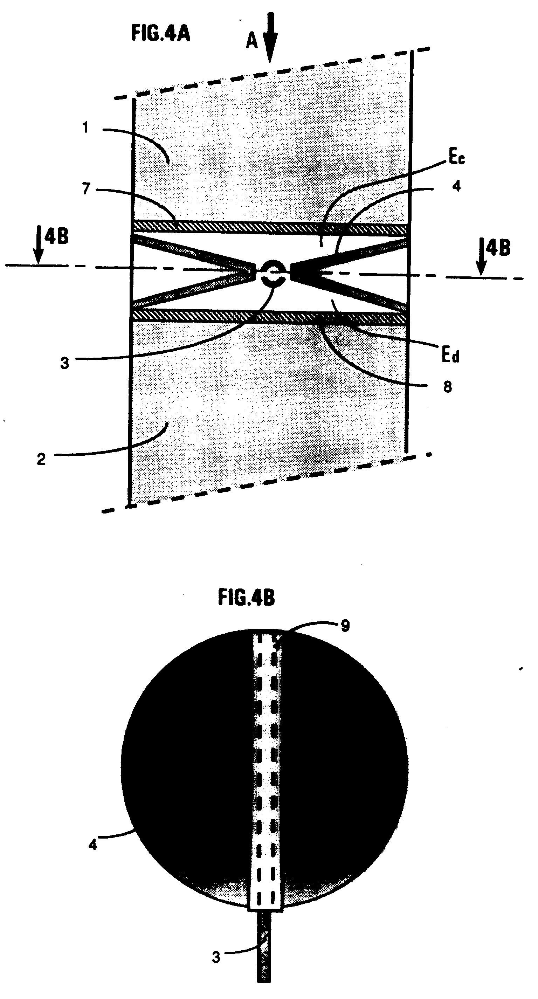

Les figures 3, 4a et 4b montrent des colonnes chromatographiques selon l'art antérieur comportant deux lits 1 et 2 séparés par un DME comportant une conduite 3 d'introduction d'un fluide secondaire (B). Le fluide principal (A) circule (Fig. 3) selon la flèche indiquée du premier lit vers le second lit.

Dans l'exemple de réalisation de la figure 3, la colonne comporte plusieurs lits ou zones 1 et 2 séparés par un DME. Le DME comprend une grille 7 située à la sortie de la zone 1 et une grille 8 positionnée en amont de la zone 2. Le fluide principal (A) circulant de la zone 1 vers la zone 2, est collecté en aval de la grille 7 par une conduite 5 et renvoyé en amont de la grille 8 par une conduite 6 de manière à être redistribué dans la zone 2. La conduite 3 permet l'introduction du fluide secondaire (B) et son mélange en ligne avec le fluide principal (A), par exemple, dans la conduite 5. Les zones de collecte et de redistribution sont séparées par un baffle 4 étanche incliné dans le DME comme schématisé sur la figure. Ce mode de réalisation permet d'obtenir une collecte conique du fait de l'inclinaison du baffle avec de faibles volumes morts. Néanmoins, le mélange relativement ponctuel des deux mélanges n'est pas optimal et la distribution latérale des fluides par les conduites 3 et 5 présente un manque de symétrie risquant de conduire à une distribution difficile et non homogène pour des lits ayant des larges diamètres.

Dans le cas du DME représenté sur les figures 4a et 4b, le fluide principal (A) est collecté en aval de la grille 7 à la sortie de la zone 1 et redistribué en aval de la grille 8 dans la zone 2. La conduite d'introduction 3 du fluide est disposée de manière à permettre une introduction transversale du fluide secondaire suivant un diamètre en zone centrale de la colonne. Le fluide secondaire est introduit par des trous 9 situés sensiblement en zone centrale où il se mélange directement avec le fluide principal . Le baffle 4, dans ce mode de réalisation, s'étend depuis la périphérie de la colonne jusqu'à proximité de la conduite d'introduction du fluide secondaire ou de collecte du fluide.

Un tel DME présente l'avantage d'offrir de faibles volumes morts et d'induire une perte de charge relativement modérée. Néanmoins la fonction de mélange n'est pas maîtrisée en totalité et entraîne facilement un phénomène de rétromélange dans les zones de collecte et de redistribution de section conique, la zone de mélange n'étant pas confinée à la zone centrale disposée diamétralement.

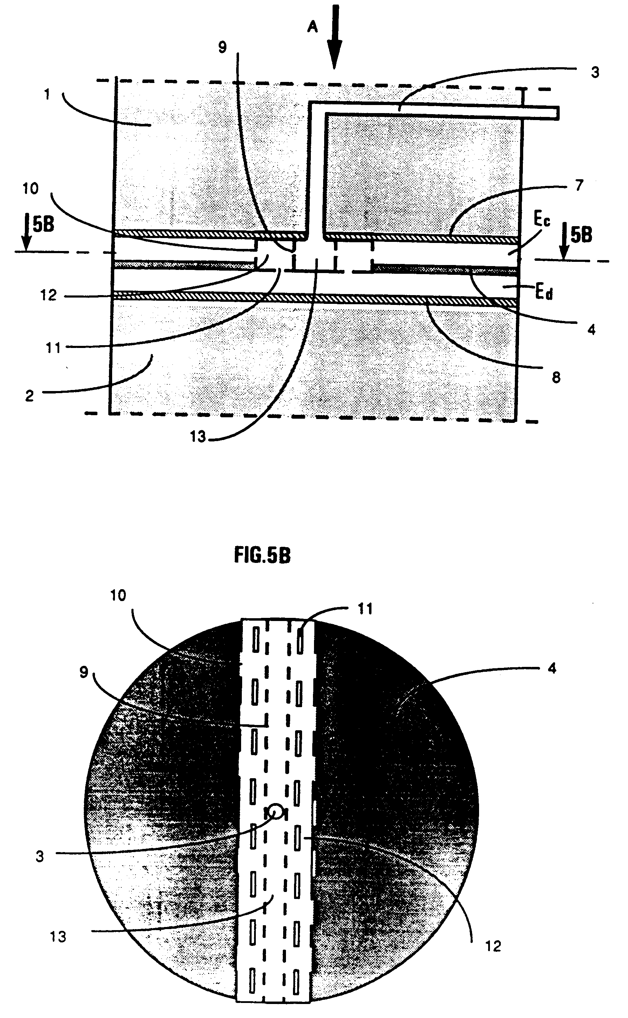

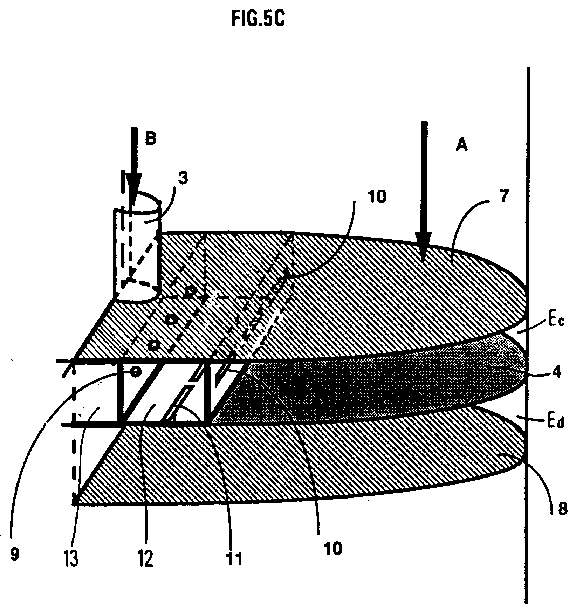

La figure 5A montre une colonne comportant un distributeur-mélangeur-extracteur ou DME, selon l'invention, positionné entre un premier lit de solides granulaires 1 et un second lit de solides granulaires 2 ou zones 1 et 2. Ce DME comporte au moins un moyen de collecte d'au moins un fluide principal (A) comprenant, par exemple, une première grille 7 positionnée, de préférence, en sortie de la zone 1 et en aval de ce moyen de collecte, dans le sens de circulation du fluide principal, au moins un moyen de redistribution d'un fluide comprenant par exemple une grille 8, positionnée de manière sensiblement parallèle à la grille 7. La grille 8 est située, par exemple, en amont de la zone 2. Le DME comprend, par exemple, sensiblement en son centre, deux chambres de mélange 12 de forme sensiblement rectangulaire allongée (Fig.5B). Chacune des chambres 12 comporte au moins un moyen d'introduction 10 du fluide principal (A), par exemple une série d'orifices ou ouvertures calibrés 10, tels que des fentes, (Figs 5B, 5C) disposés, par exemple, sur un des côtés de la chambre 12, et permettant l'entrée du fluide principal en amont du baffle 4 dans le sens de la circulation du fluide principal A et une voie de sortie 11 comportant au moins un orifice calibré 11, tel qu'une fente ou plusieurs fentes situées dans la partie inférieure de la chambre par exemple, permettant la sortie d'un fluide en aval du baffle 4. Une chambre d'injection et/ou de soutirage 13 est située, par exemple, au contact et entre les deux chambres de mélange 12 et possède, par exemple, une forme sensiblement rectangulaire allongée. La chambre d'injection et/ou de soutirage 13 est reliée à un moyen d'injection 3 ou de récupération d'un fluide secondaire (B), tel qu'une conduite, qui traverse latéralement la zone 1 de sa périphérie jusqu'à sa partie centrale, puis s'étend longitudinalement de la partie centrale vers la chambre d'injection et/ou de soutirage 13 dans laquelle elle débouche. La chambre d'injection 13 comprend au moins moyen 9 permettant le passage du fluide secondaire de la chambre de mélange 12 vers la chambre d'injection 13, tel qu'une série d'orifices calibrés. Un baffle 4 étanche est positionné dans le DME parallèlement aux grilles 7 et 8, par exemple, et s'étend de la périphérie du DME jusqu'à au moins la chambre d'injection et/ou de soutirage.

La grille 7, une chambre de mélange 12 et le baffle 4 délimitent un espace de collecte Ec.

De manière identique, la grille 8, le baffle 4, les chambres de mélange 12 et la chambre d'injection 13 délimitent un espace de redistribution Ed.

Le baffle 4 est, par exemple, placé entre la chambre de mélange 12 et la colonne de manière à isoler l'un de l'autre les espaces de collecte et de redistibution (Ec, Ed).

La dimension et la répartition des orifices 10 d'introduction du fluide principal (A), les orifices 11 de sortie d'un fluide de la chambre de mélange et les orifices 9 sont choisies, de préférence, pour obtenir une perte de charge ou perte de pression et une vitesse suffisante pour générer des turbulences dans la chambre de mélange 12 correspondant à un fort rétromélange et ainsi obtenir une meilleure efficacité du mélange des fluides principal A et secondaire B. Un tel agencement permet d'isoler la chambre de mélange 12 des espaces de collecte et de redistribution.

Ainsi, les orifices d'entrée 10 sont des séries de trous ou de fentes, de préférence, régulièrement espacées pour réaliser une collecte aussi uniforme que possible du fluide principal A vers la chambre de mélange 12.

La dimension et la géométrie des ces orifices sont choisis pour que le fluide à l'entrée de la chambre de mélange ait une vitesse favorable pour la création de turbulences à l'intérieur de la chambre de mélange et en même temps pour générer une perte de charge permettant de confiner les turbulences à l'intérieur de la chambre de mélange.

Ainsi, l'espacement entre orifices d'entrée du fluide 10 est, par exemple, compris entre 30 à 100 mm et de préférence entre 40 à 60 mm. La vitesse du fluide à travers les orifices obtenu avec un tel espacement varie par exemple entre 0,3 et 1,5 m/s, de préférence entre 0,5 et 1,3 m/s et de prférence entre 0,7 et 1,2 m/s. La perte de charge ainsi générée en sortie des orifices est comprise entre 10 et 100 g/cm² et de préférence entre 30 et 60 g/cm^{2.}

Les orifices de sortie 11 d'un fluide de la chambre de mélange sont par exemple formés par une série de trous ou de fentes, de préférence, régulièrement espacés de façon à redistribuer le fluide provenant de la chambre de mélange et, résultant dans la plupart des cas du mélange d'au moins un fluide principal à au moins un fluide secondaire, de manière la plus uniforme possible vers l'espace de redistribution Ed.

La dimension des trous ou des fentes est choisie, par exemple pour générer une certaine perte de charge permettant de confiner les turbulences à l'intérieur de la chambre de mélange 12, par exemple une perte de charge comprise entre 10 et 80 g/cm² et de préférence entre 20 et 50 g/cm². Cette valeur de perte de charge correspond notamment à un espacement des trous ou fentes de 30 à 100 mm et de préférence de 40 à 60mm et à une valeur de vitesse pour le fluide en sortie de la chambre de mélange comprise entre 0,2 et 1,3 m/s, de préférence entre 0,4 et 1,0 m/s et de préférence entre 0,6 et 0,8 m/s.

Les orifices 9 d'introduction ou de soutirage du fluide secondaire sont, par exemple formés par une série de trous, de préférence, régulièrement espacés pour injecter et/ ou soutirer le fluide secondaire B de façon la plus uniforme possible vers et/ou de la chambre de mélange 12. Ces orifices sont par exemple dimensionnés pour que la vitesse linéaire du fluide injecté à l'entrée de la chambre de mélange soit suffisamment importante pour favoriser la création de turbulences dans la chambre de mélange et pour obtenir une perte de charge significative permettant de distribuer et/ou de soutirer le fluide secondaire B de manière aussi uniforme que possible tout le long de la chambre d'injection et/ou de soutirage.

La vitesse du fluide à travers les orifices de sortie 11 est, par exemple, comprise entre 1 et 6 m/s, de préférence entre 2 et 5 m/s et de préférence entre 3 et 4 m/s. L'espacement entre les trous est choisi, par exemple entre 30 et 100 mm et de préférence entre 40 et 60 mm. La perte de charge correspondante varie entre 100 et 1000 g/cm² et de préférence entre 200 et 500 g/cm^{2.}

De cette manière on optimise la collecte et bonne distribution du fluide provenant de la chambre de mélange et passant dans l'espace de redistribution au niveau de la grille 8.

L'espace de collecte Ec situé sous la grille de collecte 7 a une forme adaptée pour minimiser les volumes morts et les turbulences des fluides. Il a une hauteur variant par exemple de 5 à 50 mm, de préférence de 10 à 30 mm et de préférence de 15 à 20 mm et une forme sensiblement rectangulaire ou conique.

L'espace de redistribution Ed est, de manière identique, conçu pour minimiser les volumes morts et les turbulences. Il a par exemple une hauteur variant entre 5 et 50 mm, de préférence entre 10 et 30 mm et de préférence entre 15 et 20mm et peut avoir n'importe quelle forme, par exemple rectangulaire ou conique.

Une chambre de mélange 12 a par exemple une forme sensiblement allongée et de préférence rectangulaire.

Le volume de la chambre de mélange est adapté pour minimiser les volumes morts. Ainsi ses dimensions sont, par exemple choisies, parmi les valeurs suivantes, sa hauteur peut varier entre 5 et 50 mm, de préférence entre 15 et 20 mm et de préférence entre 10 et 30 mm, sa largeur entre 15 et 100 mm, de préférence entre 25 et 70 mm et de préférence entre 20 et 80 mm et sa longueur variant entre 0,5 et 5 m, de préférence entre 1,5 et 3 m et de préférence entre 1 et 4 m.

Selon des critères sensiblement identiques, la chambre d'injection 13 a par exemple une forme sensiblement allongée, de même longueur que la chambre de mélange. Elle possède des caractéristiques géométriques choisies parmi le groupe des valeurs suivantes une hauteur comprise entre 5 et 50 mm de préférence entre 10 et 30 mm et de préférence entre 15 et 20 mm, une largeur comprise entre 15 et 100 mm de préférence entre 20 et 80 mm et de préférence entre 25 et 70 mm. La section de la chambre est calculée pour obtenir une vitesse longitudinale linéaire inférieure ou égale à une valeur comprise, de préférence entre 2 et 5 m/s .

Les chambres de mélange 12 sont placées, par exemple directement au contact de la grille 7 et occupe, par exemple, un volume de hauteur inférieure ou égale à la distance séparant les grilles 7 et 8.

Elles peuvent aussi occuper un volume de hauteur de préférence sensiblement égale à la distance séparant la grille 7 et le baffle 4.

Selon un certain mode de réalisation, la disposition des séries de fentes 10 et 11 permet, par exemple, la collecte et la distribution de fluide principal A et la distribution du fluide issu de la chambre de mélange 12 dans des directions, par exemple, sensiblement perpendiculaires entre elles (Figs 5A, 5C). Les séries de fentes sont disposées de préférence en quinconce (Figs 5B, 5C).

Les orifices 9 ou la série d'orifices permettant le passage du fluide secondaire vers la chambre de mélange sont, par exemple, situés sur un des côtés de la chambre 13 (Fig. 5A) de manière à permettre la circulation des fluides entre les deux chambres dans des directions sensiblement parallèles entre elles suivant des sens opposés.

La grille de collecte 7 est, de préférence, sensiblement horizontale et positionnée directement au contact avec le premier lit granulaire ou lit supérieur et couvre, de préférence sensiblement toute la section de ce lit.

La grille de distribution 8 est située, par exemple, de manière sensiblement horizontale et se trouve située immédiatement au contact du second lit granulaire ou lit inférieur. La grille 8 s'étend, de préférence, sur pratiquement toute la section second lit granulaire.

Les grilles 7 et 8 sont, dans la plupart des réalisations, des grilles JONHSON ou des grilles de type équivalent. Ces grilles comportent habituellement des fentes ayant une largeur d'environ 0,1 mm à environ 1 mm et le plus souvent une largeur d'environ 0,1 mm à environ 0,20 mm.

Bien que cela ne soit pas représenté sur les figures annexées, il est possible d'ajouter à l'intérieur de la chambre de mélange 12 au moins un moyen permettant de promouvoir la turbulence des fluides entrant dans cette chambre. Ainsi, la chambre est équipée, par exemple et de préférence, d'une série de moyens promoteurs de turbulence tels que des baffles ou chicanes internes destinés à accroître l'efficacité du mélange. Cette chambre de mélange 12 a, de préférence, un volume aussi faible que possible de manière à minimiser le rétromélange.

La conduite d'injection ou de soutirage 3 permet d'introduire et/ou de récupérer au moins un fluide secondaire (B) dans ou à partir de la chambre selon une direction perpendiculaire au plan de la grille 7.

Selon un autre mode de réalisation, non schématisé, la conduite d'injection 3 permet, par exemple, d'introduire et /ou de soutirer au moins un fluide secondaire (B) dans ou à partir de la chambre de distribution et/ou de collecte selon une direction parallèle au plan de la grille 7.

On ne sortirait pas du cadre de l'invention si la chambre 12 n'est pas solidaire de la grille 7.

Selon une autre variante de réalisation (Fig 5D), la chambre 12 occupe un volume de hauteur sensiblement égale à la distance séparant les grilles 7 et 8. Les séries d'orifices 10 et 11 permettent, dans ce schéma de figure, la collecte et la distribution des fluides dans des directions sensiblement parallèles entre elles .

Dans les modes de réalisation du DME représentés selon les figures 5A, 5B, 5C, 5D et 5E, le moyen d'injection ou de soutirage 3 est une simple conduite, tout autre moyen d'injection remplissant la même fonction pouvant être utilisé. Ainsi, lorsque plusieurs fluides secondaires sont injectés ou récupérés dans le même DME, le DME comprend, par exemple, plusieurs conduites débouchant dans la même chambre 13. Il est aussi possible d'avoir au départ plusieurs conduites se rejoignant pour former une conduite unique débouchant dans la chambre 13, ces variantes n'étant pas représentées sur les figures dans un souci de simplification.

La figure 5E schématise un mode de réalisation préférentielle pour lequel le baffle 4 a une forme telle qu'il permet de créer entre la grille 7, la périphérie du DME, la chambre de mélange 12 et lui-même un espace de collecte Ge sensiblement conique ou tronconique et entre la grille 8, la périphérie du DME, la chambre de mélange et lui-même, un espace de redistribution Ed conique ou tronconique. La pointe du cône ainsi formée est située au niveau de la chambre de mélange. Ce mode de réalisation offre l'avantage de minimiser de façon importante les volumes morts et d'obtenir une perte de charge induite qui reste faible, et entre la grille 8, la périphérie du DME, la chambre de mélange et lui-même un espace sensiblement conique.

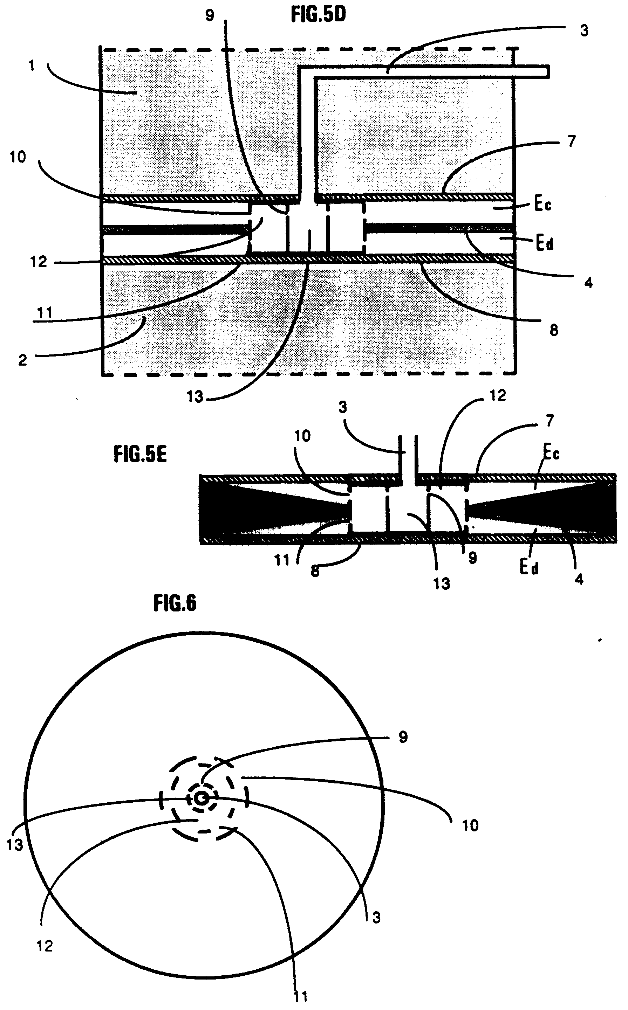

La figure 6 montre une coupe horizontale d'une variante de réalisation d'un DME selon l'invention dans lequel les sections des chambres 12 et 13 ont des formes sensiblement circulaires.

Les chambres de mélange 12 et de distribution 13 sont concentriques, la chambre de distribution étant, par exemple, positionnée à l'intérieur de la chambre de distribution 12.

La présente invention concerne également une colonne comportant au moins deux lits de solides granulaires séparés les uns des autres par au moins un DME tel que décrit ci-devant. Cette réalisation est par exemple schématisée sur la figure 5A dans le cas d'une colonne comportant deux lits de solides granulaires séparés par un DME. Par ailleurs les DME existants de l'art antérieur sont habituellement conçus de façon à être autoporteurs, c'est-à-dire qu'ils comportent une structure interne autoportante de type caillebotis par exemple, ce qui a l'inconvénient d'engendrer un volume mort supplémentaire nuisible aux performances du DME.

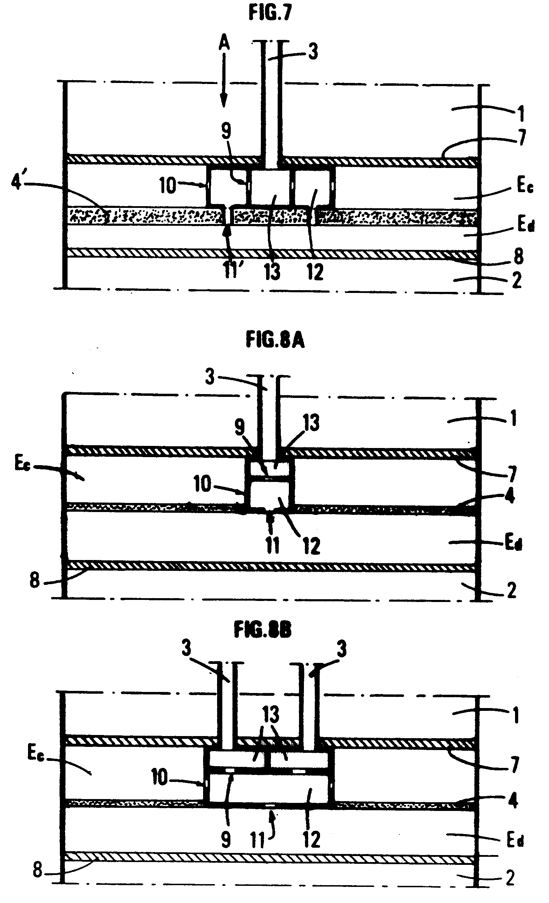

Selon un mode particulier préféré de réalisation (figure 7), le DME peut être conçu avec une structure autoportante intégrée qui n'engendre pas de volume mort comme le support caillebotis utilisé dans l'état antérieur. On utilise dans ce cas la rigidité et la résistance mécanique d'un baffle autoporteur 4' procurées par une épaisseur importante, ce baffle étant disposé de préférence sur toute la section du DME.

Un tel mode de réalisation offre, notamment, la possibilité d'augmenter l'épaisseur du baffle autoporteur de manière à obtenir une résistance mécanique plus importante tout en conservant les mêmes qualités de mélange et de redistribution du DME sans induire de volumes morts suplémentaires. La construction du DME s'en trouve de plus simplifiée.

L'épaisseur du baffle autoporteur est, par exemple, comprise entre 5 et 50 mm, de préférence entre 10 et 30 mm et de préférence entre 12 et 20 mm.

La forme et la disposition des chambres de mélange 12 et d'injection 13 peuvent être identiques aux formes décrites en relation avec les figures précédentes, et sont situées dans cet exemple de réalisation directement sur le baffle 4'. Les orifices de distribution 11' permettant le passage du fluide des chambres de mélange 12 vers l'espace de redistribution Ed présentent des caractéristiques géométriques sensiblement identiques à celles des orifices 11 précédemment mentionnées.

Les parois inférieures de la chambre de mélange 12 et/ou de la chambre d'injection 13 peuvent être formées par une partie du baffle auto-porteur 4'.

Selon un autre mode de réalisation, le DME est réalisé, par exemple, sans structure interne autoportante, et conçu pour résister aux efforts de compression, ce DME est alors supporté par une structure porteuse ou moyen de support externe noyé dans le lit de solides granulaires, de type caillebotis ou équivalent par exemple. Un tel DME présente les avantages suivants :
- la structure externe noyée dans le lit de solides granulaires n'engendre pas de volumes morts supplémentaire,
Le DME peut être réalisé avec une hauteur h sensiblement réduite, ce qui diminue les volumes morts et permet ainsi d'améliorer les performances tout en réduisant les coûts de fabrication.

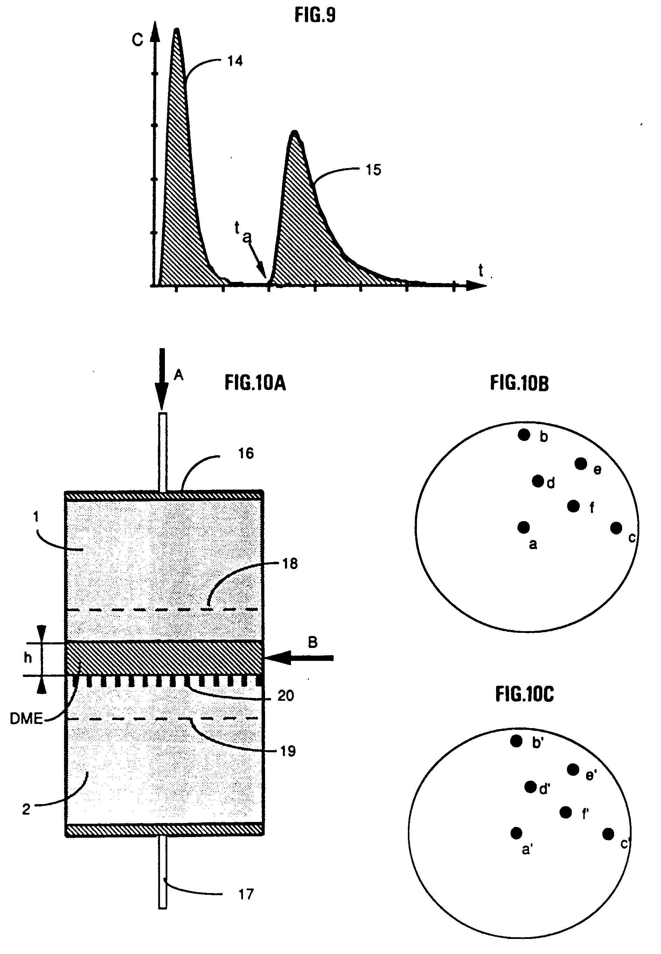

A titre d'exemple, les DME décrits en relation avec les figures précédentes ont une hauteur totale h d'environ 10 millimètres (mm) à environ 60 mm, souvent d'environ 20 mm à environ 50 mm, et de préférence d'environ 20 mm à environ 40 mm. Dans une forme particulière de réalisation, la colonne comprend pour chaque DME au moins un moyen de support 20 (Fig. 10A), tel qu'un caillebotis, noyé dans le lit de solides granulaires en aval de la grille 8. Dans le cas schématisé sur la figure 10A, le DME repose sur un caillebotis support externe 20 noyé dans le lit de solides granulaires.

Les chambres de mélange 12 et la chambre d'injection et/ou de soutirage peuvent également être disposées de différentes façons représentées sur les figures 8A, et 8 B.

La chambre d'injection et/ou de soutirage est, par exemple placée entre deux chambres de mélange disposées symétriquement comme il a été décrit en relation avec les figures 5A à 5E.

Une autre façon de positionner les chambres est représentée à la figure 8A où la chambre d'injection et/ou de soutirage 13 est disposée juste au-dessus d'au moins une chambre de mélange 12. Les orifices 9 sont alors situés, par exemple, dans la partie inférieure de la chambre d'injection 13 de manière à laisser passer le fluide secondaire vers la chambre de mélange 12, les orifices d'introduction du fluide principal étant situés par exemple sur les côtés de la chambre de mélange et les orifices 11 de sortie du mélange dans la partie inférieure de la chambre de mélange.

La disposition décrite sur la figure 8B et ses variantes permettent en particulier d'injecter et ou de soutirer simultanément ou successivement des fluides secondaires B de composition et de qualité différentes en évitant les risques de pollution par mélange dans une conduite d'amenée 3 et une chambre d'injection communes.

Sur la figure 8B deux chambres d'injection et/ou de soutirage 13 sont situées au-dessus d'une chambre de mélange 12. Chacune de ces chambres d'injection et/ou de soutirage comporte un moyen d'introduction 3 d'un fluide secondaire et des orifices 9 laissant le passage du fluide secondaire vers la chambre de mélange 12, ces orifices étant situés de préférence dans la paroi inférieure de la chambre 13 qui est en contact avec la chambre de mélange 12.

Le nombre des chambres d'injection et/ou de soutirage n'est pas limité à deux. il est possible de mettre dans le DME, plusieurs chambres d'injection et/ou de soutirage ayant chacune leur propre moyen d'introduction d'un fluide secondaire B, leurs propres orifices de sortie 9 et communiquant uniquement avec la chambre de mélange 12. On peut ainsi envisager trois chambres d'injection et/ou de soutirage positionnées les unes à côté des autres au-dessus de la chambre de mélange.

Les exemples donnés ci-après donnés à titre indicatif et non limitatifs montrent les principaux avantages obtenus grâce à un DME dont la structure a été décrite précédemment.

L'efficacité de la distribution et du mélange et/ou du soutirage du distributeur-mélangeur-extracteur est déterminée, par exemple, par des mesures de distribution de temps de séjour des fluides. Le principe est décrit ci-après en liaison avec la figure 9 : à l'instant t égal à zéro une certaine quantité de traceur, par exemple l'hexane, est envoyé dans le fluide principal ou dans le fluide secondaire, ces fluides pouvant être de l'heptane. On analyse la forme du signal obtenu, en mesurant une différence d'indice de réfraction entre le fluide principal tel que l'heptane et l'hexane. Ce signal représente le signal d'entrée 14 (Fig. 9). A un instant ultérieur on regarde la forme du signal de sortie 15 (Fig. 9). Les paramètres considérés sont le temps ta d'apparition du signal de sortie et l'aire sous la courbe du signal de sortie 15 qui représente la concentration moyenne en traceur à un endroit donné. Les mesures ont été effectuées pour une configuration de colonne telle que celle représentée sur la figure 10A. La colonne est constituée d'un distributeur de tête 16 de type AMICON, d'un mètre (m) de lit d'adsorbant 1, d'un DME, tel que décrit ci-dessus, d'un mètre de lit d'adsorbant 2 et d'un collecteur de type AMICON 17. Les signaux sont mesurés de part et d'autre du DME dans des sections de la colonne 18 et 19 situées à une distance sensiblement égale à 25 centimètres du DME. Six points de prélèvement (a), (b), (c), (d), (e), (f) sont effectués dans la section 18 (Fig. 10B) et six points de prélèvement (a'), (b'), (c'), (d'), (e'), (f') dans la section 19 (Fig. 10C). Le lit d'adsorbant est un lit de solides granulaires ayant des grains dont les dimensions varient de 0,3 mm à 1 mm. Ge solide est un tamis moléculaire de type siliporite de 3 A Å (Angström) vendu par la société CECA.

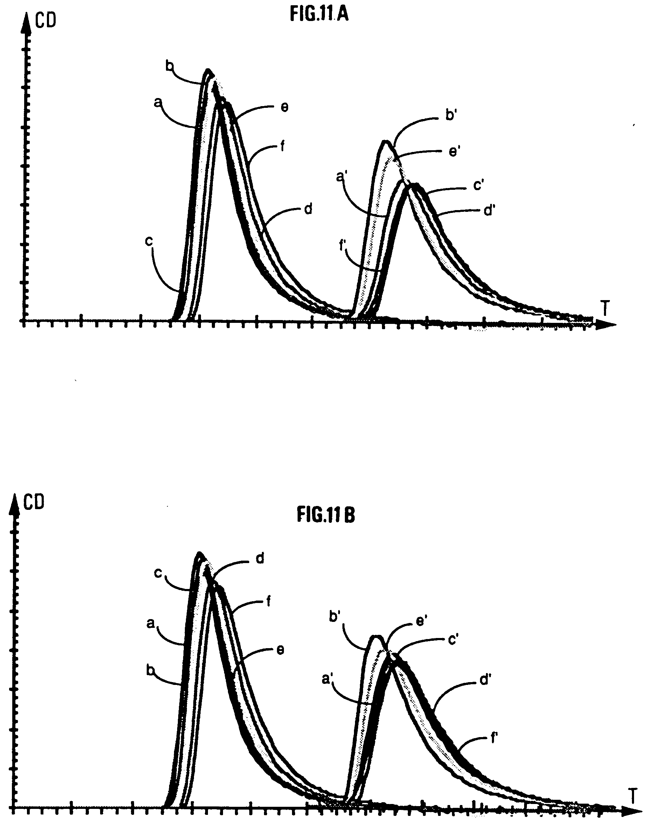

Les figures 11A, 11B, 12A, 12B et 13A, 13B présentent les résultats obtenus en utilisant un système de l'art antérieur construit selon la description du brevet US-A-3.214.247 et la schématisation de la figure 4A de ce brevet, et un DME selon l'invention comportant une chambre de mélange 12, une chambre d'injection et/ou de soutirage 13 et un baffle 4 tel que celui représenté sur la figure 5B.

Pour toutes les courbes, l'axe des abscisses représente le temps et l'axe des ordonnées la concentration d'un fluide. Les mesures ont été effectuées respectivement aux points (a), (b), (c), (d), (e), (f) section (18) (figure 10B) et aux points (a'), (b'), (c'), (d'), (e'), (f') section (19) (figure 10C).

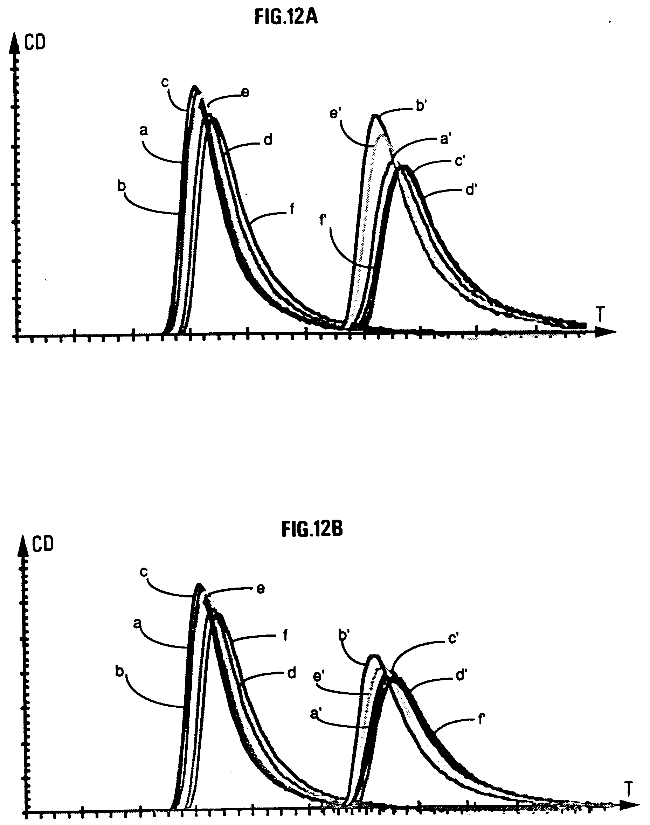

Dans les exemples figures 11A et 11B et figures 12A et 12B le traceur est envoyé par le haut de la colonne (figure 10A) sous forme de mélange avec le fluide principal. Dans le premier cas (figures 11A et 11B) aucune injection de fluide secondaire B et aucun soutirage de fluide secondaire ne sont réalisés à travers le système de l'art antérieur et à travers le DME selon l'invention alors que dans le second cas (figures 12A et 12B) un fluide secondaire B est injecté respectivement à travers le système de l'art antérieur et à travers le DME selon l'invention.

Les courbes (a), (b), (c), (d), (e), (f), (a'), (b'), (c'), (d'), (e'), (f') correspondent aux mesures effectuées aux points ayant la même dénomination sur les figures 10B et 10C.

Les courbes (a), (b), (c), (d), (e), (f) des figures 11A, 11B et 12A, 12B, représentent le résultat de la fonction distribution/mélange du distributeur de tête de la société AMICON. Ces courbes sont décalées (les temps ta sont différents) d'environ 10 (s) secondes. On note une distribution qui n'est pas parfaite et des aires sous les différentes courbes qui ne sont pas toutes identiques.

Les courbes (a'), (b'), (c'), (d'), (e'), (f') de la figure 11A montrent le résultat du passage du fluide principal A à travers le système de l'art antérieur lorsqu'aucun fluide secondaire B n'est injecté. Le décalage en temps est légèrement augmenté et la disparité au niveau des aires sous les différentes courbes également. On remarque que ce système perturbe la circulation du fluide principal tant au niveau collecte qu'au niveau redistribution, et qu'il y a dégradation sensible de la distribution entre les deux points de mesure.

Les courbes (a'), (b'), (c'), (d'), (e'), (f') de la figure 11B présentent le résultat du passage du fluide principal A à travers le DME selon l'invention lorsqu'aucun fluide secondaire B n'est injecté. Le décalage en temps de ces courbes est le même (voir légèrement inférieur) que dans le cas des courbes (a), (b), (c), (d), (e), (f). La différence des aires des différentes courbes (a'), (b'), (c'), (d'), (e'), (f') est la même que celle obtenue avec les courbes (a), (b), (c), (d), (e), (f). La différence des formes géométriques entre les courbes (a), (b), (c), (d), (e), (f) et les courbes (a'), (b'), (c'), (d'), (e'), (f') (forme aplatie) est essentiellement due à la dispersion naturelle provoquée par le lit de solides granulaires. Ces courbes prouvent que l'utilisation d'un DME selon l'invention tel que décrit précédemment, assure une meilleure fonction de collecte et de redistribution avec une perturbation de la circulation du fluide principal sensiblement moins importante que dans le cas du système de l'art antérieur. En effet, il n'est pas observé de dégradation sensible de la distribution entre les deux points de mesure.

Les figures 12A et 12B diffèrent du cas précédent du fait que l'on a injecté un fluide secondaire à travers le système de l'art antérieur (figure 12A) et à travers le DME selon l'invention (figure 12B). L'examen des différentes courbes montre que le résultat est le même que celui obtenu à partir de l'analyse des courbes précédentes. Le DME selon l'invention perturbe moins la circulation du fluide principal et assure une meilleure fonction de mélange.

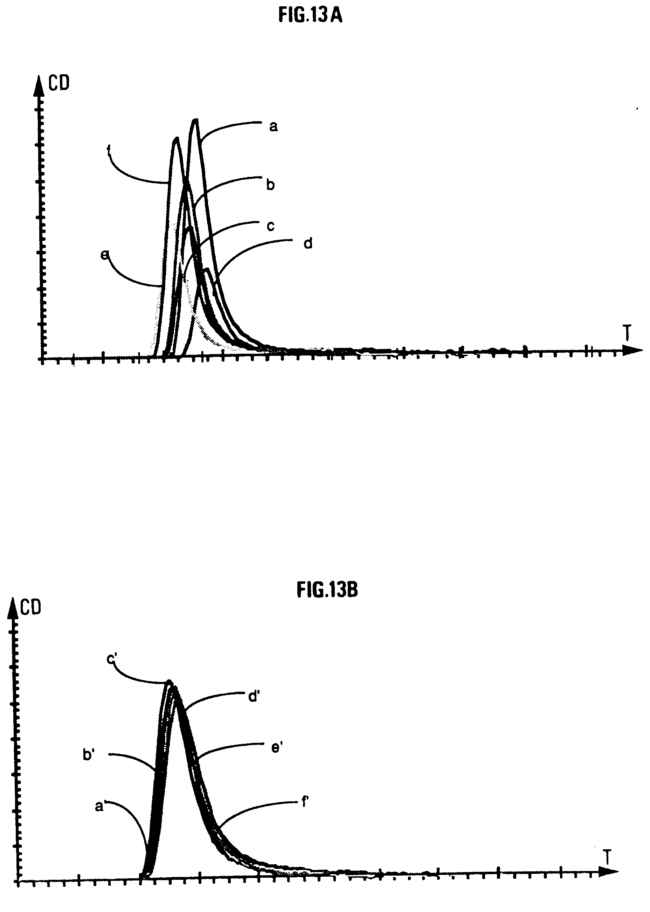

Les figures 13A et 13B présentent le résultat des mesures obtenues lorsque l'on injecte en plus un traceur dans le fluide secondaire B, le fluide principal A circulant normalement dans la colonne, et ceci respectivement lorsque l'on utilise le système de l'art antérieur (figure 13A) et un DME selon l'invention (figure 13B).

Sur la figure 13A il apparaît clairement que les signaux n'apparaissent pas tous simultanément et que la concentration moyenne, correspondant à l'aire située sous chacune des courbes, de chacun des signaux est différente ce qui montre que le mélange est de mauvaise qualité. Sur la figure 13B les signaux apparaissent quasiment simultanément, la concentration moyenne est identique et le mélange est uniforme en tous points.

Ces trois exemples de courbes mettent en évidence les avantages offerts par le DME comprenant une chambre de mélange et une chambre d'injection et/ou de soutirage, tel que décrit ci-dessus.

Les DME réalisés selon l'invention peuvent prendre différentes formes tout en conservant toujours les mêmes principes de fonctionnement.

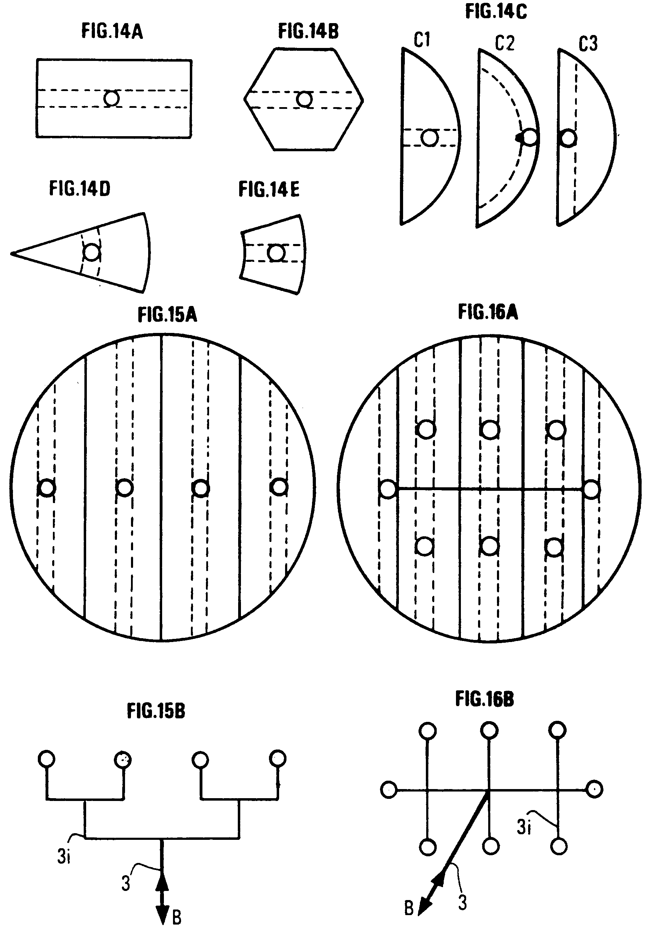

Les figures 14A à 14E décrivent différentes formes de DME respectivement rectangulaire, polygonale, sectorielle, segmentaire données à titre indicatifs et non limitatif.

Les chambres de mélange et d'injection (figurées en pointillées sur les figures) ont, par exemlpe, une forme sensiblement allongée, généralement rectiligne (fig 14A, 14B, 14C₁, 14C_{3,} 14E) ou encore courbée ( Fig 14C_{2,} 14D.)

Ces chambres sont, par exemple, disposées sensiblement au milieu du DME (fig 14A, 14B, 14C₁, 14D et 14E) ou d'un seul côté (fig 14C₂, 14C_{3,}).

La taille maximale d'un DME de forme circulaire ou polygonale peut varier et atteindre un diamètre d'au moins 1,5m, ce diamètre pouvant aller jusqu'à 2m. Pour les autres formes, par exemple, pour les formes rectangulaire, et segmentaire, la taille maximale peut aller jusqu'à 3 ou 4 m en longueur et 1,5 à 2 m en largeur.

Dans le cas de lits granulaires de très large section, par exemple, ayant une taille supérieure aux tailles maximales mentionnées ci-dessus en référence aux formes circulaires et rectangulaires, la qualité du mélange et de la distribution peut se détériorer lorsque l'on utilise un seul DME. Il est alors possible d'utiliser plusieurs DME positionnés les uns à côté des autres de façon, par exemple, à couvrir toute la section du lit, chacun des DME ayant ainsi une taille inférieure à la taille maximale. Un tel agencement permet d'obtenir un bon mélange et une distribution pour chaque sous-section ainsi définie ayant les qualités mentionnées en relation avec le DME décrit par exemple à la figure 5A.

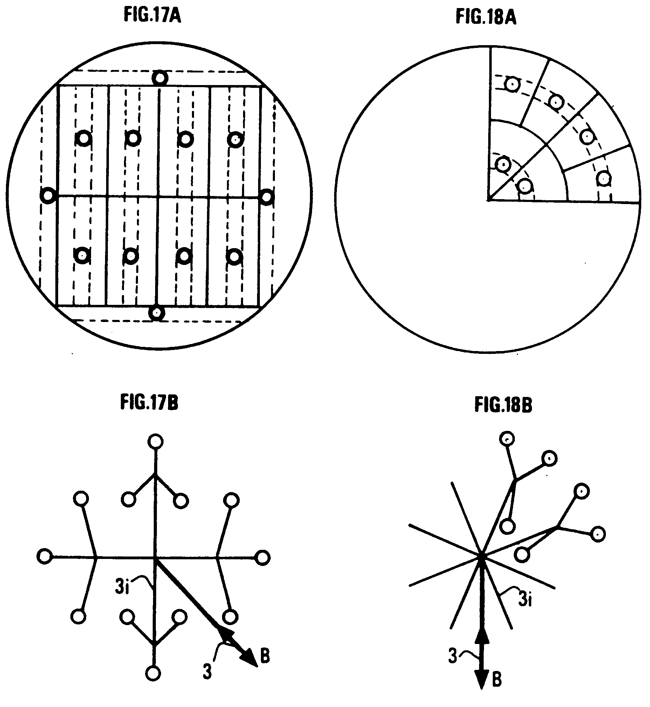

Quelques exemples d'agencements de plusieurs DME et leur mode d'alimentation en fluides sont donnés aux figures 15A, 15B, 16A, 16B, 17A, 17B, 18A, 18B à titre indicatif et non limitatif.

Dans tous les exemples de réalisation, utilisant plusieurs DME disposés côte à côte, les moyens d'injection et de soutirage du fluide secondaire B sont conçus par exemple pour alimenter tous les DME d'une façon aussi uniforme et isochrone que possible. Ceci peut être obtenu, par exemple en assurant au moins une symétie de distribution et une isolongueur, notamment, des moyens d'injection 3 et de leurs ramifications 3i permettant l'injection du fluide secondaire vers les différents DME (figures 15B, 16B, 17B, 18B).

Dans le cas où plusieurs fluides secondaires B sont injectés ou soutirés sur un même DME ou sur un ensemble de plusieurs DME situés les uns à côté des autres, le nombre des moyens d'injection 3 et leurs ramifications 3i est, de préférence égal au nombre de fluides secondaires injectés dans le DME. Ces moyens d'injection et leurs moyens de ramifications sont de préférence indépendants les uns des autres.

## Revendications

1. Distributeur-mélangeur-extracteur d'un ou plusieurs fluides adapté à être interposé dans une colonne entre un premier et un second lit de solides granulaires, comportant en combinaison :
• au moins un moyen de collecte (7) d'un premier fluide ou fluide principal, communiquant avec un espace de collecte (Ec),
• au moins un conduit (3) ou conduit d'injection et/ou de soutirage pour introduire et/ou soutirer un second fluide ou fluide secondaire, ledit conduit (3) étant relié à au moins une première chambre (13), ou chambre de distribution et/ou de collecte dudit second fluide, ladite chambre comportant sur au moins une de ses parois au moins un moyen de passage (9) différent du conduit (3),
• au moins une deuxième chambre (12) ou chambre de mélange et/ou de soutirage, ladite deuxième chambre étant disposée à proximité de ladite première chambre (13) et ladite deuxième chambre communiquant avec elle par au moins un desdits moyens de passage (9), ladite deuxième chambre comportant au moins un moyen de passage tel qu'une ouverture (10) située sur au moins une de ses parois de façon à laisser le passage dudit premier fluide provenant dudit espace de collecte (Ec), et ladite deuxième chambre comportant au moins une voie de sortie (passage) (11) d'un mélange résultant dudit fluide principal et dudit fluide secondaire,
• un espace de redistribution (Ed) et un moyen de redistribution (8) dudit mélange issu de la chambre de mélange,
• un baffle (4) disposé par rapport audit moyen de collecte (7) et de ladite deuxième chambre (12) pour que l'espace de collecte (Ec) communique avec une des ouvertures (10) et disposé par rapport audit moyen de redistribution (8) et de ladite chambre de mélange (12) pour que l'espace de redistribution (Ed) communique avec au moins une desdites voies de sortie(11), ledit baffle (4) séparant lesdits espaces de collecte et de redistribution (Ec, Ed),
• caractérisé en ce que la ou lesdites voies de sortie (11) sont un ou des orifices calibrés et en ce que la dimension de l'ensemble desdits orifices calibrés est choisie pour générer une perte de charge adaptée à confiner les turbulences du fluide à l'intérieur de ladite chambre de mélange.

2. Distributeur-mélangeur-extracteur selon la revendication 1, caractérisé en ce que la section du ou de l'ensemble desdits orifices calibrés (11) est choisie pour que la vitesse du fluide passant de la chambre de mélange (12) vers l'espace de redistribution Ed soit comprise entre 1 et 5 m/s, les moyens (10) d'introduction du fluide principal depuis l'espace de collecte Ec vers la chambre de mélange (12) comportent des orifices dont la section est telle que la vitesse du fluide principal (A) est comprise entre 1 et 5 m/s et en ce que le moyen de passage (9) du fluide secondaire comporte des orifices dont la section est choisie pour que la vitesse de chaque fluide secondaire de ou vers la chambre de mélange (12) à travers ces orifices soit comprise entre 1 et 15 m/s.

3. Distributeur-mélangeur-extracteur selon la revendication 1, caractérisé en ce que ledit moyen de redistribution comporte une grille (8) s'étendant sensiblement sur toute la section de la colonne.

4. Distributeur-mélangeur-extracteur selon l'une des revendications de 1 à 3, caractérisé en ce qu'il comporte au moins deux chambres d'injection et/ou de soutirage (13) reliées chacune à un conduit d'injection et/ou de soutirage (3) d'un second fluide, lesdites chambres comportant au moins un orifice de passage (9) du fluide secondaire de chacune des chambres vers la chambre de mélange (12).

5. Distributeur-mélangeur-extracteur selon l'une des revendications 1 à 4, caractérisé en ce qu'il comporte au moins deux chambres d'injection et/ou de soutirage, lesdites chambres de collecte et/ou de soutirage étant disposées l'une à côté de l'autre et au-dessus de la chambre de mélange et/ou de soutirage.

6. Distributeur-mélangeur-extracteur selon l'une des revendications précédentes, caractérisé en ce que lesdits conduits d'introduction et/ou de soutirage d'un fluide secondaire sont agencés par rapport à ladite colonne pour introduire et/ou soutirer un fluide secondaire dans ou à partir de la chambre d'injection et/ou de soutirage selon une direction sensiblement parallèle audit moyen de collecte (7) tel qu'une grille.

7. Distributeur-mélangeur-extracteur selon l'une des revendications précédentes, caractérisé en ce que lesdits conduits d'introduction et/ou de soutirage d'un fluide secondaire sont agencés par rapport à ladite colonne pour introduire et/ou soutirer le ou les fluides secondaires dans ou de la chambre d'injection et/ou de soutirage (13) selon une direction sensiblement perpendiculaire audit moyen de collecte (7) tel qu'une grille de collecte.

8. Distributeur-mélangeur-extracteur selon l'une des revendications précédentes, caractérisé en ce que lesdits orifices calibrés (11) et lesdites ouvertures de passage (9) du ou des fluides secondaires vers ou de la chambre de mélange sont disposés au niveau de la chambre de mélange pour permettre l'introduction dudit second fluide et/ou son extraction selon une direction sensiblement perpendiculaire à la sortie du fluide par la voie (11).

9. Distributeur-mélangeur-extracteur selon l'une des revendications précédentes, caractérisé en ce que lesdites ouvertures (10) sont situées sur au moins une première paroi de ladite chambre de mélange (12), et lesdites voies de sortie (11) sur au moins une autre des parois de ladite chambre de mélange (12) et en ce que lesdites ouvertures (10) et lesdites voies (11) de sortie sont disposées en alternance les unes par rapport aux autres.

10. Distributeur-mélangeur-extracteur selon l'une des revendications précédentes, caractérisé en ce que les moyens d'introduction (10) et le moyen de passage (9) pour le fluide secondaire (B) sont disposés respectivement par rapport à ladite chambre de mélange pour permettre la circulation des fluides dans des directions sensiblement parallèles entre elles, suivant des sens opposés.

11. Distributeur-mélangeur-extracteur selon l'une des revendications précédentes, caractérisé en ce que les moyens de passage (10) et le moyen de passage (9) pour le fluide secondaire (B) sont disposés respectivement par rapport à ladite deuxième chambre (12) et par rapport à ladite première chambre (13) pour permettre la circulation dudit second fluide et dudit premier fluide dans des directions sensiblement perpendiculaires entre elles.

12. Distributeur-mélangeur-extracteur selon l'une des revendications précédentes, caractérisé en ce que la forme du baffle (4) est adaptée pour que lesdits espaces de collecte (Ec) et de redistribution (Ed), soient sensiblement tronconiques les bases desdits espaces étant en appui sur une des parois de ladite colonne et lesdits espaces communiquant entre eux par leur ouverture la plus étroite au voisinage de la chambre de collecte.

13. Distributeur-mélangeur-extracteur selon l'une des revendications précédentes, caractérisé en ce que la forme du baffle et/ou sa disposition dans la colonne sont choisis pour isoler les espaces de collecte et de redistribution.

14. Distributeur-mélangeur-extracteur selon l'une des revendications précédentes, caractérisé en ce que ledit baffle (4) s'étend de la périphérie de la colonne jusqu'à au moins ladite chambre de mélange et/ou de soutirage.

15. Distributeur-mélangeur-extracteur selon l'une des revendications précédentes, caractérisé en ce que ledit baffle (4) comporte au moins une série d'orifices (11'), lesdits orifices (11') communiquant avec lesdits orifices (10) de la chambre de mélange et/ou de soutirage et ledit baffle (4) s'étend sensiblement sur toute la section de ladite colonne.

16. Distributeur-mélangeur-extracteur selon l'une des revendications précédentes, caractérisé en ce que baffle est un baffle auto-porteur (4') ayant une épaisseur comprise entre 5 et 50 mm et, de préférence, entre 12 et 20 mm.

17. Distributeur-mélangeur-extracteur selon l'une des revendications précédentes, caractérisé en ce que la chambre de mélange (12) comprend des moyens pour favoriser les turbulences.

18. Colonne comportant au moins un premier lit (1) et au moins un second lit (2) de solides granulaires séparés par au moins un distributeur-mélangeur-extracteur selon l'une des revendications précédentes, dans laquelle la première grille (7) est sensiblement en contact avec le premier lit et la deuxième grille (8) est sensiblement en contact avec le second lit.

19. Colonne selon la revendication 18, caractérisée en ce que la première et la deuxième grille (7, 8) couvrent respectivement sensiblement la totalité de la section de premier lit et sensiblement la totalité de la section du second lit.

20. Colonne selon la revendication 18, caractérisée en ce qu'il comporte plusieurs DME disposés les uns à côté des autres et en ce que lesdits conduits d'injection et/ou de soutirage (3i) reliant chacune desdites chambres d'injection et/ou de soutirage sont des ramifications d'une conduite principale (3).

21. Colonne selon la revendication 20, caractérisée en ce que la distribution desdites ramifications (3i) et leur longueur sont choisies pour assurer une isolongeur et une symétrie de distribution du fluide secondaire dans chacune desdites chambres d'injection et/ou de soutirage.

22. Colonne selon l'une des revendications 18 à 20, caractérisée en ce que chaque distributeur-mélangeur-extracteur comporte au moins un moyen de support externe noyé dans le lit de solides granulaires en aval de la deuxième grille (8) du distributeur-mélangeur-extracteur.

23. Colonne selon la revendication 22, où ledit moyen de support externe est de type caillebotis ou équivalent.

24. Procédé pour fabriquer un distributeur-mélangeur-extracteur d'un ou plusieurs fluides adapté à être interposé dans une colonne entre un premier et un second lit de solides granulaires, comportant en combinaison :
• au moins un moyen de collecte (7) d'un premier fluide ou fluide principal, communiquant avec un espace de collecte (Ec),
• au moins un conduit (3) ou conduit d'injection et/ou de soutirage pour introduire et/ou soutirer un second fluide ou fluide secondaire, ledit conduit (3) étant relié à au moins une première chambre (13), ou chambre de distribution et/ou de collecte dudit second fluide, ladite chambre comportant sur au moins une de ses parois au moins un moyen de passage (9) différent du conduit (3),
• au moins une deuxième chambre (12) ou chambre de mélange et/ou de soutirage, ladite deuxième chambre étant disposée à proximité de ladite première chambre (13) et ladite deuxième chambre communiquant avec elle par au moins un desdits moyens de passage (9), ladite deuxième chambre comportant au moins un moyen de passage tel qu'une ouverture (10) située sur au moins une de ses parois de façon à laisser le passage dudit premier fluide provenant dudit espace de collecte (Ec), et ladite deuxième chambre comportant au moins une voie de sortie (11) d'un mélange résultant dudit fluide principal et dudit fluide secondaire,
• un espace de redistribution (Ed) et un moyen de redistribution (8) dudit mélange issu de la chambre de mélange
• un baffle (4) disposé par rapport audit moyen de collecte (7) et de ladite deuxiéme chambre (12) pour que l'espace de collecte (Ec) communique avec une des ouvertures (10) et disposé par rapport audit moyen de redistribution (8) et de ladite chambre de mélange (12) pour que l'espace de redistribution (Ed) communique avec au moins une desdites voies de sortie (11), ledit baffle (4) séparant lesdits espaces de collecte et de redistribution (Ec, Ed),
caractérisé en ce que l'on définit lesdites voies de passage (11) comme étant un ou plusieurs orifices calibrés et en ce que l'on dimensionne le ou l'ensemble desdits orifices calibrés pour obtenir une perte de charge capable de confiner les turbulences du fluide à l'intérieur de ladite chambre de mélange.

25. Méthode pour distribuer, mélanger et/ou soustraire un ou plusieurs fluides à partir de ou dans un DME selon l'une des revendications 1 à 16, caractérisée en ce qu'elle comporte en combinaison au moins les étapes suivantes :
• on collecte au moins un premier fluide ou fluide principal, à l'aide d'un moyen de collecte (7) communiquant avec un espace de collecte (Ec), et on fait passer à travers au moins une ouverture de passage (10) vers une chambre de mélange (12) ou chambre de mélange et/ou de soutirage,
• on injecte et/ou on soutire au moins un second fluide à l'aide d'au moins un conduit (3) ou conduit d'injection et/ou de soutirage, ledit conduit (3) étant relié à au moins une première chambre (13), ou chambre de distribution et/ou de collecte dudit second fluide, ladite chambre comportant sur au moins une de ses parois au moins un moyen de passage (9) différent du conduit (3), ledit second fluide étant envoyé vers ladite chambre de mélange (12),
caractérisée en ce que
• on soutire le mélange, résultant dudit fluide principal et dudit fluide secondaire au sein de la chambre de mélange, par une ou plusieurs voie de sortie (11), la ou lesdites voies de sortie étant formée par un ou des orifices calibrés et la dimension de l'ensemble du ou desdits orifices calibrés étant telle que l'on obtient le confinement des turbulences du fluide à l'intérieur de la chambre de mélange, et
• on distribue ledit mélange extrait par le ou lesdits orifices calibrés à travers un espace de redistribution (Ed) et des moyens de redistribution (8).

26. Méthode selon la revendication 25, caractérisée en ce que l'on introduit ledit fluide principal à travers lesdits moyens (10) comportant des orifices dont la section est choisie pour que la vitesse du fluide principal (A) soit comprise entre 1 et 5 m/s,
• on introduit ledit second fluide secondaire en le faisant passer à travers des moyens de passage (9) comportant des orifices dont la section est choisie pour que la vitesse dudit fluide secondaire soit comprise entre 1 et 15m/s, et
• on extrait ledit mélange issu de ladite chambre de mélange vers l'espace de redistribution Ed avec une vitesse comprise entre 1 et 5 m/s.

27. Méthode selon l'une des revendications 25 ou 26, caractérisée en ce que l'on dispose un DME présentant l'une des caractéristiques des revendications 1 à 16 entre un premier et un second lit de solides granulaires, lesdits moyens de distribution (8) étant en contact avec au moins un desdits lits de solides granulaires et on distribue ledit mélange sensiblement sur la section dudit lit de solides granulaires au contact avec lesdits moyens de distribution.

28. Méthode selon l'une des revendications 25 ou 26, caractérisée en ce que l'on injecte ou l'on soutire ledit fluide secondaire de la chambre d'injection et/ou de soutirage (13) selon une direction sensiblement parallèle audit moyen de collecte (7).

29. Méthode selon l'une des revendications 25 ou 26, caractérisée en ce que l'on injecte ou l'on soutire ledit fluide secondaire de la chambre d'injection et/ou de soutirage (13) selon une direction sensiblement perpendiculaire audit moyen de collecte (7).

30. Méthode selon l'une des revendications 25 ou 26, caractérisée en ce que l'on introduit ou l'on extrait ledit second fluide selon une direction sensiblement perpendiculaire à la direction du fluide à travers les orifices (11).

31. Méthode selon l'une des revendications 25 ou 26, caractérisée en ce que l'on fait circuler le fluide principal et le fluide secondaire selon des directions sensiblement parallèles entre elles, et suivant des sens opposés.

32. Méthode selon l'une des revendications 25 ou 26, caractérisée en ce que l'on fait circuler le fluide principal et le fluide secondaire selon des directions sensiblement perpendiculaires entre elles.

33. Utilisation du DME selon l'une des revendications 1 à 17 et de la méthode selon l'une des revendications 25 à 32 pour réaliser une chromatographie en phase liquide.

## Claims

1. A distributor-mixer-extractor of one or more fluids designed to be interposed in a column between a first and and a second bed of granular solids, comprising in combination:
• at least one collecting means (7) of a first or main fluid, communicating with a collecting space (Ec),
• at least one channel (3) or injection and/or removal channel for introducing and/or removing a second fluid or secondary fluid, said channel (3) being connected to at least a first chamber (13) or a distribution and/or collecting chamber of said second fluid, said chamber having at least one passage means (9) different from the channel (3) on at least one of its walls,
• at least a second chamber (12) or a mixing and/or removal chamber, said second chamber being located in proximity to said first chamber (13) and said second chamber communicating with it by at least one of said passage means (9), said second chamber having at least one passage means such as an orifice (10) located on at least one of its walls so as to allow the passage of said first fluid coming from said collecting space (Ec), and said second chamber having at least one outlet (passage) (11) for a mixture resulting from said main fluid and said secondary fluid,
• a redistributing space (Ed) and a redistributing means (8) of said mixture resulting from the mixing chamber,
• a baffle (4) located relative to said collecting means (7) and to said second chamber (12) so that the collecting space (Ec) communicates with one of the orifices (10) and located relative to said redistributing means (8) and to said mixing chamber (12) so that the redistributing means (Ed) communicates with at least one of said outlets (11), said baffle (4) separating said collecting and redistributing spaces (Ec, Ed),
• characterised in that said outlet or outlets (11) are one or more calibrated orifices and in that the size of the assembly of said calibrated orifices is selected so as to generate a pressure drop designed to confine fluid turbulences inside said mixing chamber.

2. A distributor-mixer-extractor according to claim 1, characterised in that the section of the or of all said calibrated orifices (11) is selected so that the flowrate of the fluid passing from the mixing chamber (12) to the redistributing space Ed is between 1 and 5 m/s, the introduction means (10) for the main fluid from the collecting space Ec to the mixing chamber (12) include orifices whose section is such that the flowrate of the main fluid (A) is between 1 and 5 m/s and in that the passage means (9) of the secondary fluid has orifices whose section is selected so that the flowrate of each secondary fluid from or to the mixing chamber (12) through these orifices is between 1 and 15 m/s.

3. A distributor-mixer-extractor according to claim 1, characterised in that said redistribution means includes a grid (8) extending substantially over the entire section of the column.

4. A distributor-mixer-extractor according to any of claims 1 to 3, characterised in that it includes at least two injection and/or removal chambers (13) each connected to an injection and/or removal channel (3) for a second fluid, said chambers including at least one through-orifice (9) for the secondary fluid from each one of the chambers to the mixing chamber (12).

5. A distributor-mixer-extractor according to any of claims 1 to 4, characterised in that it includes at least two injection and/or removal chambers, said collecting and/or removal chambers being located next to each other and above the mixing and/or removal chamber.

6. A distributor-mixer-extractor according to any of the preceeding claims, characterised in that said introduction and/or removal channels of a secondary fluid, are arranged relative to said column to introduce and/or remove a secondary fluid into or from the injection and/or removal chamber in a direction substantially parallel to said collecting means (7) such as a grid.

7. A distributor-mixer-extractor according to any of the preceeding claims, characterised in that said introduction and/or removal channels of a secondary fluid, are arranged relative to said column to introduce and/or remove the secondary fluid or fluids into or from the injection and/or removal chamber (13) in a direction substantially perpendicular to said collecting means (7) such as a collecting grid.

8. A distributor-mixer-extractor according to any of the preceeding claims, characterised in that said calibrated orifices (11) and said passage openings (9) of the secondary fluid or fluids to or from the mixing chamber, are located at the mixing chamber level to allow the introduction of said secondary fluid and/or its extraction in a direction substantially perpendicular to the outflow of the fluid through the passage (11).

9. A distributor-mixer-extractor according to any of the preceeding claims, characterised in that said openings (10) are located on at least a first wall of said mixing chamber (12), and said outlet passages (11) on at least another of the walls of said mixing chamber (12) and in that said openings (10) and said outlet passages (11) are arranged in alternation with respect to each other.

10. A distributor-mixer-extractor according to any of the preceeding claims, characterised in that the introduction means (10) and the passage means (9) for the secondary fluid (B) are arranged respectively relative to said mixing chamber to allow circulation of the fluids in directions substantially parallel to each other, in opposite directions.

11. A distributor-mixer-extractor according to any of the preceeding claims, characterised in that the passage means (10) and the passage means (9) for the secondary fluid (B), are arranged respectively relative to said second chamber (12) and relative to said first chamber (13) to allow circulation of said second fluid and of said first fluid in directions subtantially perpendicular to each other.

12. A distributor-mixer-extractor according to any of the preceeding claims, characterised in that the shape of the baffle (4) is designed so that said collecting (Ec) and redistributing (Ed) spaces, are substantially truncated cones, the bases of said spaces resting on one of the walls of said column and said spaces communicating with each other through their narrowest opening in the vicinity of the collecting chamber.

13. A distributor-mixer-extractor according to any of the preceeding claims, characterised in that the shape of the baffle and/or its location in the column are selected to isolate the collecting and redistributing spaces.

14. A distributor-mixer-extractor according to any of the preceeding claims, characterised in that said baffle (4) extends from the periphery of the column up to at least said mixing and/or removal chamber.

15. A distributor-mixer-extractor according to any of the preceeding claims, characterised in that said baffle (4) includes at least a series of orifices (11'), said orifices (11') communicating with said orifices (10) in the mixing and/or removal chamber and said baffle (4) extends substantially over the entire section of said column.

16. A distributor-mixer-extractor according to any of the preceeding claims, characterised in that the baffle is a self-supporting baffle (4') having a thickness between 5 and 50 mm, and preferably between 12 and 20 mm.

17. A distributor-mixer-extractor according to any of the preceeding claims, characterised in that the mixing chamber (12) includes means encouraging turbulences.

18. A column including at least a first bed (1) and at least a second bed (2) of granular solids separated by at least a distributor-mixer-extractor according to any of the preceeding claims, wherein the first grid (7) is substantially in contact with the first bed and the second grid (8) is substantially in contact with the second bed.

19. A column according to claim 18, characterised in that the first and second grid (7,8) cover respectively substantially the entire section of the first bed and substantially the entire section of the second bed.

20. A column according to claim 18, characterised in that it includes several DME arranged next to each other and in that said injection and/or removal channels (3i) connecting each one of said injection and/or removal chambers are branches of a main channel (3).

21. A column according to claim 20, characterised in that the distribution of said branches (3i) and their length are selected to ensure isolength and symetry of distribution of the secondary fluid in each one of said injection and/or removal chambers.

22. A column according to any of claims 18 to 20, characterised in that each distributor-mixer-extractor includes at least an external support means embedded in the bed of granular solids downstream of the second grid (8) of the distributor-mixer-extractor.

23. A column according to claim 22, where said external support means is of the grating type or equivalent.

24. A process for the manufacture of a distributor-mixer-extractor of one or more fluids designed to be located in a column between a first and a second bed of granular solids, comprising in combination:
• at least one collecting means (7) of a first fluid or main fluid, communicating with a collecting space (Ec),
• at least a channel (3) or injection and/or removal channel for introducing and/or removing a second fluid or secondary fluid, said channel (3) being connected to at least a first chamber (13), or distributing and/or collecting chamber of said second fluid, said chamber including on at least one of its walls at least one passage means (9) different from the channel (3),
• at least a second chamber (12) or a mixing and/or removal chamber, said second chamber being located in proximity to said first chamber (13) and said second chamber communicating with it by at least one of said passage means (9), said second chamber including at least one passage means such as an opening (10) located on at least one of the walls so as to allow passage of said first fluid coming from said collecting space (Ec), and said second chamber including at least one outlet passage (11) for the mixture resulting from said main fluid and said secondary fluid,
• a redistributing space (Ed) and a redistributing means (8) of said mixture resulting from the mixing chamber,
• a baffle (4) located relative to said collecting means (7) and to said second chamber (12) so that the collecting space (Ec) communicates with one of the openings (10) and located relative to said redistributing means (8) and to said mixing chamber (12) so that the redistributing means (Ed) communicates with at least one of said outlet passages (11), said baffle (4) separating said collecting and redistributing spaces (Ec, Ed),
characterised in that said passages (11) are defined as being one or more calibrated orifices and in that the or all said calibrated orifices are dimensioned so as to obtain a pressure drop capable of confining the fluid turbulences inside said mixing chamber.

25. A method for distributing, mixing and/or removing one or more fluids from or in a DME according to any of claims 1 to 16, characterised in that it includes in combination at least the following steps:
• collecting at least a first fluid or main fluid with a collecting means (7) communicating with a collecting space (Ec), and passing it through at least one passage opening (10) into a mixing chamber (12) or a mixing and/or removal chamber,
• injecting and/or removing at least a second fluid with at least a channel (3) or injection and/or removal channel, said channel (3) being connected to at least one first chamber (13), or distributing and/or collecting chamber of said second fluid, said chamber including on at least one of its walls at least one passage means (9) different from the channel (3), said second fluid being sent to said mixing chamber (12),
characterised in that
• the mixture resulting from said main fluid and said secondary fluid inside the mixing chamber, is removed through one or more outlet passages (11), the outlet passage or passages being formed by one or more calibrated orifices and the size of the assembly of said calibrated orifice or orifices being such that there is obtained the confinement of the fluid turbulences inside the mixing chamber, and
• said mixture extracted through said calibrated orifice or orifices is distributed through a redistributing space (Ed) and redistributing means (8).

26. A method according to claim 25, characterised in that said main fluid is introduced through said means (10) including orifices whose section is selected so that the flowrate of the main fluid (A) is between 1 and 5 m/s,
• said second secondary fluid is introduced by passing it through passage means (9) including orifices whose section is selected so that the flowrate of said secondary fluid is between 1 and 15 m/s, and
• said mixture resulting from said mixing chamber is extracted towards the redistributing space Ed with a flowrate of between 1 and 5 m/s.

27. A method according to claim 25 or 26, characterised in that a DME having one of the characteristics of claims 1 to 16 is located between a first and a second bed of granular solids, said distributing means (8) being in contact with at least one of said beds of granular solids and said mixture is distributed substantially over the section of said bed of granular solids upon contact with said distribution means.

28. A method according to claim 25 or 26, characterised in that said secondary fluid is injected or removed from the injection and/or removal chamber (13) in a direction substantially parallel to said collecting means (7).

29. A method according to claim 25 or 26, characterised in that said secondary fluid is injected or removed from the injection and/or removal chamber (13) in a direction substantially Perpendicular to said collecting means (7).

30. A method according to claim 25 or 26, characterised in that said second fluid is introduced or extracted in a direction substantially perpendicular to the direction of the fluid through the orifices (11).

31. A method according to claim 25 or 26, characterised in that the main fluid and the secondary fluid are circulated in directions substantially parallel to each other, and in opposite directions.

32. A method according to claim 25 or 26, characterised in that the main fluid and the secondary fluid are circulated in directions substantially perpendicular to each other.

33. Use of the DME according to any of claims 1 to 17 and use of the method according to any of claims 25 to 32 to carry out a liquid phase chromatography.

## Patentansprüche

1. Verteil- Misch- und Extraktionsvorrichtung für eines oder mehrere Fluide zur Zwischenschaltung in einer Kolonne, zwischen ein erstes und ein zweites Bett aus granulatförmigen Feststoffen, in Kombination umfassend:
- wenigstens ein Sammelmittel (7) für ein erstes Fluid oder ein Hauptfluid, das mit einem Sammelraum (Ec) in Verbindung steht,
- wenigstens eine Leitung (3) oder Injektions- und/oder Abzugsleitung zum Einführen und/oder Abziehen eines zweiten Fluids oder eines Sekundärfluids, wobei diese Leitung (3) mit wenigstens einer ersten Kammer (13) oder Verteilerkammer und/oder Sammelkammer für dieses zweite Fluid verbunden ist, und diese Kammer auf wenigstens einer ihrer Wandungen wenigstens ein Durchgangsmittel (9), das unterschiedlich zur Leitung (3) ist, umfaßt,
- wenigstens eine zweite Kammer (12) oder Misch- und/oder Abzugskammer, wobei diese zweite Kammer benachbart dieser ersten Kammer (13) angeordnet ist und diese zweite Kammer mit ihr über wenigstens eines der Durchgangsmittel (9) in Verbindung steht, und diese zweite Kammer wenigstens ein Durchgangsmittel wie eine Öffnung (10) umfaßt, die auf wenigstens einer ihrer Wandungen derart angebracht ist, daß der Durchgang des aus diesem Sammelraum (Ec) stammenden ersten Fluids zugelassen wird, und diese zweite Kammer wenigstens einen Austrittsweg (Durchgang) (11) für ein Gemisch umfaßt, das aus diesem Hauptfluid und diesem Sekundärfluid resultiert,
- einen Wiederverteilerraum (Ed) und ein Wiederverteilermittel (8) dieses aus der Mischkammer stammenden Fluids,
- eine Schikane (4), die bezüglich dieses Sammelmittels (7) und dieser zweiten Kammer (12) derart angeordnet ist, daß der Sammelraum (Ec) mit einer der Öffnungen (10) in Verbindung steht und bzgl. dieses Wiederverteilermittels (8) und dieser Mischkammer (12) derart angeordnet ist, daß der Wiederverteilerraum (Ed) mit wenigstens einem dieser Austrittswege (11) in Verbindung steht, wobei diese Schikane (4) diese Sammel- und Wiederverteilerräume (Ec, Ed) trennt,
- dadurch gekennzeichnet, daß dieser oder diese Austrittswege (11) aus einer oder mehreren kalibrierten Öffnungen bestehen und daß die Abmessung der Gesamtheit dieser kalibrierten Öffnungen derart gewählt ist, daß ein angepaßter Druckverlust erzeugt wird, der die Turbulenzen des Fluids im Inneren dieser Mischkammer begrenzt.

2. Verteil- Misch- und Extraktionsvorrichtung nach Anspruch 1, dadurch gekennzeichnet, daß der Querschnitt des oder der Gesamtheit dieser kalibrierten Öffnungen (11) derart gewählt ist, daß die Geschwindigkeit des aus der Mischkammer (12) zur Wiederverteilerkammer (Ed) tretenden Fluids zwischen 1 und 5 m/s beträgt, die Einführungsmittel (10) des Hauptfluids aus den Sammelraum (Ec) zur Mischkammer (12) Öffnungen umfassen, deren Querschnitt derart ist, daß die Geschwindigkeit des Hauptfluids (A) zwischen 1 und 5 m/s liegt und daß das Durchgangsmittel (9) des Sekundärfluids Öffnungen umfaßt, deren Querschnitt so gewählt ist, daß die Geschwindigkeit jedes Sekundärfluids aus oder gegen die Mischkammer (12) durch diese Öffnungen zwischen 1 und 15 m/s beträgt.

3. Verteil- Misch- und Extraktionsvorrichtung nach Anspruch 1, dadurch gekennzeichnet, daß das Wiederverteilermittel ein Gitter (8) umfaßt, das sich im wesentlichen über den gesamten Querschnitt der Kolonne erstreckt.

4. Verteil- Misch- und Extraktionsvorrichtung nach einem der Ansprüche 1 bis 3, dadurch gekennzeichnet, daß sie wenigstens zwei Injektions- und/oder Abzugskammern (13) umfaßt, die je mit einer Injektions- und/oder Abzugsleitung (3) für ein zweites Fluid verbunden sind, wobei diese Kammern wenigstens eine Durchgangsöffnung (9) für das Sekundärfluid jeder der beiden Kammern zur Mischkammer (12) umfassen.

5. Verteil- Misch- und Extraktionsvorrichtung nach einem der Ansprüche 1 bis 4, dadurch gekennzeichnet, daß sie wenigstens zwei Injektions- und/oder Abzugskammern umfaßt, wobei diese Sammel- und/oder Abzugskammern seitlich nebeneinander und oberhalb der Misch- und/oder Abzugskammern angeordnet sind.

6. Verteil- Misch- und Extraktionsvorrichtung nach einem der vorhergehenden Ansprüche, dadurch gekennzeichnet, daß diese Einführungs- und/oder Abzugsleitungen für ein Sekundärfluid bezüglich dieser Kolonne so ausgebildet sind, um ein Sekundärfluid in oder aus dieser Injektions- und/oder Abzugskammer einzuführen und/oder abzuziehen, und zwar gemäß einer Richtung, die im wesentlichen parallel zu diesem Sammelmittel (7), beispielsweise einem Gitter, ist.

7. Verteil- Misch- und Extraktionsvorrichtung nach einem der vorhergehenden Ansprüche, dadurch gekennzeichnet, daß diese Einführungs- und/oder Abzugsleitungen für ein Sekundärfluid bezüglich dieser Kolonne so ausgebildet sind, daß sie das oder die Sekundärfluide in die oder aus der Injektionskammer (13) einführen oder abziehen, und zwar gemäß einer Richtung, die im wesentlichen senkrecht zum Sammelmittel (7), beispielsweise einem Sammelgitter, ist.

8. Verteil- Misch- und Extraktionsvorrichtung nach einem der vorhergehenden Ansprüche, dadurch gekennzeichnet, daß diese kalibrierten Öffnungen (11) und diese Durchgangsöffnungen (9) des oder der Sekundärfluide in die oder aus der Mischkammer in Höhe der Mischkammer angeordnet sind, um die Einführung dieses zweiten Fluides und/oder seiner Extraktion gemäß einer Richtung, die im wesentlichen senkrecht zum Austritt des Fluids über den Weg (11) ist, zu ermöglichen.

9. Verteil- Misch- und Extraktionsvorrichtung nach einem der vorhergehenden Ansprüche, dadurch gekennzeichnet, daß diese Öffnungen (10) auf wenigstens einer ersten Wand dieser Mischkammer (12) angeordnet sind und diese Austrittswege (11) auf wenigstens einer anderen der Wandungen dieser Mischkammer (12) angebracht sind und daß diese Öffnungen (10) und diese Austrittswege (11) abwechselnd bezüglich einander angeordnet sind.

10. Verteil- Misch- und Extraktionsvorrichtung nach einem der vorhergehenden Ansprüche, dadurch gekennzeichnet, daß die Einführungsmittel (10) und das Durchgangsmittel (9) für das Sekundärfluid (B) jeweils bezüglich dieser Mischkammer angeordnet sind, um die Zirkulation der Fluide in zueinander im wesentlichen parallelen Richtungen, jedoch von entgegengesetztem Sinn, zu ermöglichen.

11. Verteil- Misch- und Extraktionsvorrichtung nach einem der vorhergehenden Ansprüche, dadurch gekennzeichnet, daß die Durchgangsmittel (10) und das Durchgangsmittel (9) für das Sekundärfluid (B) jeweils bezüglich dieser zweiten Kammer (12) und bezüglich dieser ersten Kammer (13) so angeordnet sind, daß sie die Zirkulation dieses zweiten Fluids und dieses ersten Fluids in zueinander im wesentlichen senkrechten Richtungen ermöglichen.

12. Verteil- Misch- und Extraktionsvorrichtung nach einem der vorhergehenden Ansprüche, dadurch gekennzeichnet, daß die Form der Schikane (4) so ausgelegt ist, daß diese Sammel- (Ec) und Wiederverteilungsräume (Ed) im wesentlichen kegelstumpfförmig sind, wobei die Basen dieser Räume sich gegen eine der Wandungen dieser Kolonne abstützen und diese Räume miteinander über ihre engste Öffnung benachbart der Sammelkammer in Verbindung stehen.

13. Verteil- Misch- und Extraktionsvorrichtung nach einem der vorhergehenden Ansprüche, dadurch gekennzeichnet, daß die Form der Schikane und/oder ihre Anordnung in der Kolonne gewählt sind, um die Sammel- und Wiederverteilerräume zu isolieren.

14. Verteil- Misch- und Extraktionsvorrichtung nach einem der vorhergehenden Ansprüche, dadurch gekennzeichnet, daß diese Schikane (4) sich vom Umfang der Kolonne bis wenigstens zu dieser Misch- und/oder Abzugskammer erstreckt.

15. Verteil- Misch- und Extraktionsvorrichtung nach einem der vorhergehenden Ansprüche, dadurch gekennzeichnet, daß diese Schikane (4) wenigstens eine Reihe von Öffnungen (11') umfaßt, wobei diese Öffnungen (11') mit diesen Öffnungen (10) der Misch- und/oder Abzugskammer in Verbindung stehen und diese Schikane (4) sich im wesentlichen über den gesamten Querschnitt der Kolonne erstreckt.

16. Verteil- Misch- und Extraktionsvorrichtung nach einem der vorhergehenden Ansprüche, dadurch gekennzeichnet, daß die Schikane eine selbsttragende Schikane (4') ist, die eine Dicke zwischen 5 und 50 mm und bevorzugt zwischen 12 und 20 mm hat.

17. Verteil- Misch- und Extraktionsvorrichtung nach einem der vorhergehenden Ansprüche, dadurch gekennzeichnet, daß die Mischkammer (12) Mittel zur Begünstigung der Turbulenzen umfaßt.

18. Kolonne, die wenigstens ein erstes Bett (1) und wenigstens ein zweites Bett (2) aus granulatförmigen Feststoffen, getrennt durch wenigstens eine Verteil- Misch- und Extraktionsvorrichtung nach einem der vorhergehenden Ansprüche umfaßt, bei der das erste Gitter (7) im wesentlichen in Kontakt mit dem ersten Bett und das zweite Gitter (8) im wesentlichen in Kontakt mit dem zweiten Bett steht.

19. Kolonne nach Anspruch 18, dadurch gekennzeichnet, daß das erste und das zweite Gitter (7, 8) jeweils im wesentlichen die Gesamtheit des Querschnitts des ersten Betts und im wesentlichen die Gesamtheit des Querschnitts des zweiten Betts abdecken.

20. Kolonne nach Anspruch 18, dadurch gekennzeichnet, daß sie mehrere DME umfaßt, die seitlich nebeneinander angeordnet sind und daß diese Injektions- und/oder Abzugsleitungen (3i), die jeder dieser Injektions- und/oder Abzugskammern verbinden, Verzweigungen einer Hauptleitung (3) sind.

21. Kolonne nach Anspruch 20, dadurch gekennzeichnet, daß die Verteilung dieser Verzweigungen (3i) und ihre Länge so gewählt sind, daß eine gleiche Länge und eine Verteilungssymmetrie des Sekundärfluids in jeder der Injektions- und/oder Abzugskammern sichergestellt ist.

22. Kolonnen nach einem der Ansprüche 18 bis 20, dadurch gekennzeichnet, daß jede Verteil- Misch- und Extraktionsvorrichtung wenigstens ein externes Trägermittel umfaßt, das in dieses Bett aus granularen Feststoffen in Strömungsrichtung hinter diesem zweiten Gitter (8) der Verteil- Misch- und Extraktionsvorrichtung eingebettet bzw. vergossen ist.

23. Kolonne nach Anspruch 22, wo dieses externe Trägermittel vom Typ Gitterrost oder äquivalent ist.

24. Verfahren zur Herstellung einer Verteil- Misch- und Extraktionsvorrichtung für ein oder mehrere Fluide einer Ausbildung zur Zwischenschaltung in eine Kolonne zwischen ein erstes und zweites Bett aus granulatförmigen Feststoffen, in Kombination umfassend:
- wenigstens ein Sammelmittel (7) für ein erstes Fluid oder ein Hauptfluid, das mit einem Sammelraum (Ec) in Verbindung steht,
- wenigstens eine Leitung (3) oder Injektions- und/oder Abzugsleitung zum Einführen und/oder Abziehen eines zweiten Fluids oder eines Sekundärfluids, wobei diese Leitung (3) mit wenigstens einer ersten Kammer (13) oder Verteilerkammer und/oder Sammelkammer für dieses zweite Fluid verbunden ist, wobei diese Kammer auf wenigstens einer ihrer Wandungen wenigstens ein Durchgangsmittel (9), das unterschiedlich zur Leitung (3) ist, umfaßt,
- wenigstens eine zweite Kammer (12) oder Misch- und/oder Abzugskammer, wobei diese zweite Kammer benachbart dieser ersten Kammer (13) angeordnet ist und diese zweite Kammer mit ihr über wenigstens eines der Durchgangsmittel (9) in Verbindung steht, und diese zweite Kammer wenigstens ein Durchgangsmittel wie eine Öffnung (10) umfaßt, die auf wenigstens einer ihrer Wandungen derart angebracht ist, daß der Durchgang des aus diesem Sammelraum (Ec) stammenden ersten Fluids zugelassen wird, und diese zweite Kammer wenigstens einen Austrittsweg (Durchgang) (11) für ein Gemisch umfaßt, das aus diesem Hauptfluid und diesem Sekundärfluid resultiert,
- einen Wiederverteilerraum (Ed) und ein Wiederverteilermittel (8) dieses aus der Mischkammer stammenden Fluids,
- eine Schikane (4), die bezüglich dieses Sammelmittels (7) und dieser zweiten Kammer (12) derart angeordnet ist, daß der Sammelraum (Ec) mit einer der Öffnungen (10) in Verbindung steht und bzgl. dieses Wiederverteilermittels (8) und dieser Mischkammer (12) derart angeordnet ist, daß der Wiederverteilerraum (Ed) mit wenigstens einem dieser Austrittswege (11) in Verbindung steht, wobei diese Schikane (4) diese Sammel- und Wiederverteilerräume (Ec, Ed) trennt,
- dadurch gekennzeichnet, daß diese Durchgangswege (11) so definiert sind, daß sie eine oder mehrere kalibrierte Öffnungen darstellen und daß man die oder die Gesamtheit dieser kalibrierten Öffnungen so dimensioniert, daß man einen Druckverlust erhält, der in der Lage ist, die Turbulenzen des Fluids im Inneren dieser Mischkammer zu begrenzen.

25. Verfahren zum Verteilen, Mischen und/oder Abziehen eines oder mehrerer Fluide aus oder in eine DME nach einem der Ansprüche 1 bis 16, dadurch gekennzeichnet, daß es in Kombination wenigstens die folgenden Stufen umfaßt:
- man sammelt wenigstens ein erstens Fluid oder Hauptfluid mit Hilfe eines Sammelmittels (7) das mit einem Sammelraum (Ec) in Verbindung steht und man ermöglicht den Durchgang über wenigstens eine Durchgangsöffnung (10) zu einer Mischkammer (12) oder Misch- und/oder Abzugskammer,
- man injiziert wenigstens ein zweites Fluid und/oder zieht es ab, mit Hilfe wenigstens einer Leitung (3) oder Injektions- und/oder Abzugsleitung, wobei diese Leitung (3) mit wenigstens einer ersten Kammer (13) oder Verteiler- und/oder Sammelkammer für dieses zweite Fluid verbunden ist, wobei diese Kammer über wenigstens eine ihrer Wandungen wenigstens ein Durchgangsmittel (9) das unterschiedlich zur Leitung (3) ist, umfaßt, wobei das zweite Fluid zu dieser Mischkammer (12) geschickt wird,
dadurch gekennzeichnet, daß
- man dieses Gemisch, das aus dem Hauptfluid und diesem Sekundärfluid inmitten der Mischkammer resultiert, über wenigstens einen oder mehrere Austrittswege (11) abzieht, wobei der oder die Austrittswege gebildet sind durch wenigstens eine oder mehrere kalibrierte Öffnungen und die Abmessung der Gesamtheit des oder dieser kalibrierten Öffnungen derart ist, daß man die Begrenzung der Turbulenzen des Fluids im Inneren der Mischkammer erhält und
- man dieses über diese kalibrierten Öffnungen extrahierte Gemisch über einen Wiederverteilerraum (Ed) und Wiederverteilermittel (8) verteilt.

26. Verfahren nach Anspruch 25, dadurch gekennzeichnet, daß man dieses Hauptfluid über diese Mittel (10), die Öffnungen umfassen, einführt, deren Querschnitt so gewählt ist, daß die Geschwindigkeit des Hauptfluids (A) zwischen 1 und 5 m/s beträgt,
- man führt dieses zweite Sekundärfluid ein, indem man es durch diese Durchgangsmittel (9) passieren läßt, welche Öffnungen umfassen, deren Querschnitt so gewählt ist, daß die Geschwindigkeit dieses Sekundärfluids zwischen 1 und 15 m/s liegt, und
- man extrahiert dieses aus dieser Mischkammer stammende Gemisch gegen den Wiederverteilerraum Ed mit einer Geschwindigkeit zwischen 1 und 5 m/s.

27. Verfahren nach einem der Ansprüche 25 oder 26, dadurch gekennzeichnet, daß man ein DME, welches eine der Charakteristiken der Ansprüche 1 bis 16 umfaßt, zwischen einem ersten und einem zweiten Feststoffbett anordnet, wobei diese Verteilermittel (8) in Kontakt mit wenigstens einem dieser granulatförmigen Feststoffbetten stehen und man verteilt dieses Gemisch im wesentlichen auf den Querschnitt dieses Feststoffbetts aus granulatförmigen Feststoffen in Kontakt mit diesen Verteilermitteln.

28. Verfahren nach einem der Ansprüche 25 oder 26, dadurch gekennzeichnet, daß man dieses Sekundärfluid injiziert in oder abzieht aus der Injektions- und/oder Abzugskammer (13) gemäß einer Richtung, im wesentlichen parallel zu diesem Sammelmittel (7).

29. Verfahren nach einem der Ansprüche 25 oder 26, dadurch gekennzeichnet, daß man dieses Sekundärfluid injiziert in oder abzieht aus der Injektions- und/oder Abzugskammer (13) gemäß einer Richtung, im wesentlichen senkrecht zu diesem Sammelmittel (7).

30. Verfahren nach einem der Ansprüche 25 oder 26, dadurch gekennzeichnet, daß man dieses zweite Fluid einführt in oder extrahiert gemäß einer Richtung, die im wesentlichen senkrecht zur Richtung des Fluids durch diese Öffnungen (11) ist.

31. Verfahren nach einem der Ansprüche 25 oder 26, dadurch gekennzeichnet, daß man das Hauptfluid und das Sekundärfluid gemäß Richtungen zirkulieren läßt, die im wesentlichen parallel zueinander, jedoch von entgegengesetztem Sinn sind.

32. Verfahren nach einem der Ansprüche 25 oder 26, dadurch gekennzeichnet, daß man das Hauptfluid und das Sekundärfluid gemäß im wesentlichen zueinander senkrechten Richtungen zirkulieren läßt.

33. Verwendung des DME nach einem der Ansprüche 1 bis 17 und des Verfahrens nach einem der Ansprüche 25 bis 32 zur Realisierung einer Chromatographie in flüssiger Phase.
